# EUROPEAN PATENT APPLICATION

(11) **EP 4 380 283 A1**
(43) Date of publication of application: **05.06.2024**
(21) Application number: 24150043.8
(22) Date of filing: 02.01.2024
(51) Int. Cl.: H04W 72/20, H04W 74/0808, H04W 92/18

(54) **CHANNEL ACCESS MECHANISMS FOR UNLICENSED SIDELINK COMMUNICATIONS**

(30) Priority: 02.12.2022 US 202263429890 P
(71) Applicant: Parsa Wireless Communications, Llc, Stamford, CT 06902 (US)
(72) Inventor: Kalbasi, Reza, San Diego, 92130 (US)
(74) Representative: Grättinger Möhring von Poschinger Patentanwälte Partnerschaft mbB

(57) **Abstract**

Apparatus and methods for channel access in an Unlicensed (UL) Sidelink (SL) communication system. In one embodiment, a relay UE triggers a listen-before-talk (LBT) process requesting to access first resources for transmission of data to a base station (BS), or reception of data from the BS. In response to the LBT, the relay UE receives a first grant that indicates the first resources for the transmission of data to a base station (BS), or reception of data from the BS. The relay UE receives from one or more UEs which are in a first set, wherein the first set of UEs are in communication range of the first UE, requests to access second resources for transmission or reception of data between the first UE, and the one or more UEs in the first set. Finally, the relay UE transmits grants of the second resources, to the one or more UEs of the first set, wherein the second resources include the remaining part of the first resources not used by the first UE.

## Description

### BRIEF DESCRIPTION OF THE DRAWINGS

FIG. 1 shows an example of a system of mobile communications according to some aspects of some of various exemplary embodiments of the present disclosure.
FIG. 2A and FIG. 2B show examples of radio protocol stacks for user plane and control plane, respectively, according to some aspects of some of various exemplary embodiments of the present disclosure.
FIG. 3A, FIG. 3B and FIG. 3C show example mappings between logical channels and transport channels in downlink, uplink and sidelink, respectively, according to some aspects of some of various exemplary embodiments of the present disclosure.
FIG. 4A, FIG. 4B and FIG. 4C show example mappings between transport channels and physical channels in downlink, uplink and sidelink, respectively, according to some aspects of some of various exemplary embodiments of the present disclosure.
FIG. 5A, FIG. 5B, FIG. 5C and FIG. 5D show examples of radio protocol stacks for NR sidelink communication according to some aspects of some of various exemplary embodiments of the present disclosure.
FIG. 6 shows example physical signals in downlink, uplink and sidelink according to some aspects of some of various exemplary embodiments of the present disclosure.
FIG. 7 shows examples of Radio Resource Control (RRC) states and transitioning between different RRC states according to some aspects of some of various exemplary embodiments of the present disclosure.
FIG. 8 shows example frame structure and physical resources according to some aspects of some of various exemplary embodiments of the present disclosure.
FIG. 9 shows example component carrier configurations in different carrier aggregation scenarios according to some aspects of some of various exemplary embodiments of the present disclosure.
FIG. 10A shows an example of Channel Occupancy Time (COT) sharing between a relay User Equipment (UE) and a remote UE according to some aspects of some of various exemplary embodiments of the present disclosure.
FIG. 10B shows an example of COT sharing between a relay UE and one or more remote UEs according to some aspects of some of various exemplary embodiments of the present disclosure.
FIG. 10C shows an example of COT sharing between a remote UE and one UE according to some aspects of some of various exemplary embodiments of the present disclosure.
FIG. 10D shows an example of COT sharing between a remote UE and one or more remote UEs according to some aspects of some of various exemplary embodiments of the present disclosure.
FIG. 11 shows an example illustrating COT resources in time domain according to some aspects of some of various exemplary embodiments of the present disclosure.
FIG. 12 shows an example illustrating COT resources in time and frequency domain according to some aspects of some of various exemplary embodiments of the present disclosure.
FIG. 13 shows an example of a COT sharing in a Sidelink (SL) communication system with interference measurement capability for limiting collisions in channel access according to some aspects of some of various exemplary embodiments of the present disclosure.
FIG. 14 shows example components of a UE for transmission and/or reception according to some aspects of some of various exemplary embodiments of the present disclosure.
FIG. 15 shows example components of a base station (BS) for transmission and/or reception according to some aspects of some of various exemplary embodiments of the present disclosure.
FIG. 16 shows a flow diagram illustrating a COT sharing method performed by a relay UE according to some aspects of some of various exemplary embodiments of the present disclosure.
FIG. 17 shows a flow diagram illustrating a COT sharing method performed by a remote UE according to some aspects of some of various exemplary embodiments of the present disclosure.

### DETAILED DESCRIPTION

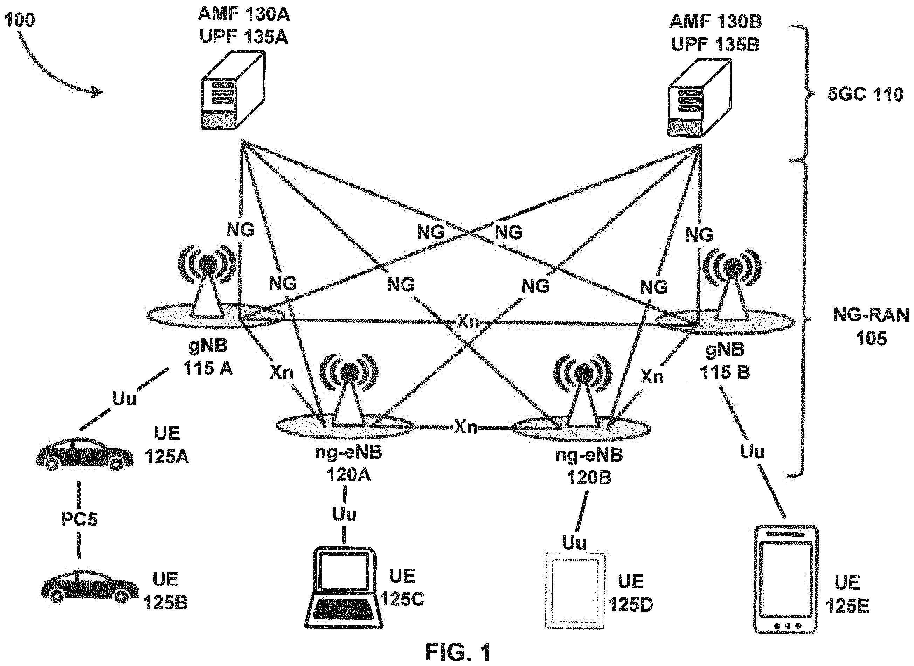

FIG. 1 shows an example of a system of mobile communications 100 according to some aspects of some of various exemplary embodiments of the present disclosure. The system of mobile communication 100 may be operated by a wireless communications system operator such as a Mobile Network Operator (MNO), a private network operator, a Multiple System Operator (MSO), an Internet of Things (IOT) network operator, etc., and may offer services such as voice, data (e.g., wireless Internet access), messaging, vehicular communications services such as Vehicle to Everything (V2X) communications services, safety services, mission critical service, services in residential, commercial or industrial settings such as IoT, industrial IOT (IIOT), etc.

The system of mobile communications 100 may enable various types of applications with different requirements in terms of latency, reliability, throughput, etc. Example supported applications include enhanced Mobile Broadband (eMBB), Ultra-Reliable Low-Latency Communications (URLLC), and massive Machine Type Communications (mMTC). eMBB may support stable connections with high peak data rates, as well as moderate rates for cell-edge users. URLLC may support application with strict requirements in terms of latency and reliability and moderate requirements in terms of data rate. Example mMTC application includes a network of a massive number of IoT devices, which are only sporadically active and send small data payloads.

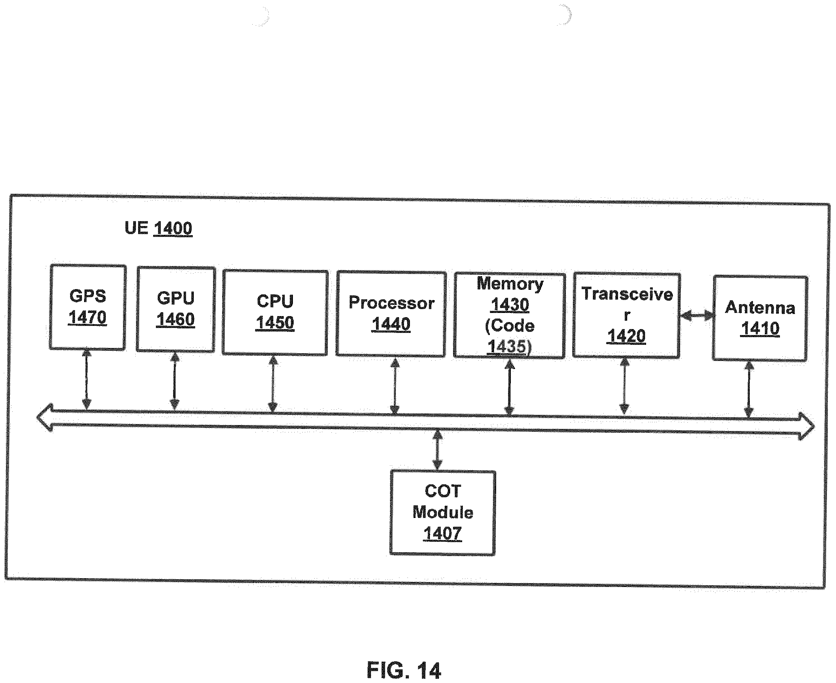

The system of mobile communications 100 may include a Radio Access Network (RAN) portion and a core network portion. The example shown in FIG. 1 illustrates a Next Generation RAN (NG-RAN) 105 and a 5G Core Network (5g-CN) 110 as examples of the RAN and core network, respectively. Other examples of RAN and core network may be implemented without departing from the scope of this disclosure. Other examples of RAN include Evolved Universal Terrestrial Radio Access Network (EUTRAN), Universal Terrestrial Radio Access Network (UTRAN), etc. Other examples of core network include Evolved Packet Core (EPC), UMTS Core Network (UCN), etc. The RAN implements a Radio Access Technology (RAT) and resides between User Equipments (UEs) 125 and the core network FIG. 14 shows example of SL resource allocation process with pre-emption for aperiodic traffic according to some aspects of some of various exemplary embodiments of the present disclosure. Examples of such RATs include New Radio (NR), Long Term Evolution (LTE) also known as Evolved Universal Terrestrial Radio Access (EUTRA), Universal Mobile Telecommunication System (UMTS), etc. The RAT of the example system of mobile communications 100 may be NR. The core network resides between the RAN and one or more external networks (e.g., data networks) and is responsible for functions such as mobility management, authentication, session management, setting up bearers and application of different Quality of Services (QoSs). The functional layer between the UE 125 and the RAN (e.g., the NG-RAN 105) may be referred to as Access Stratum (AS) and the functional layer between the UE 125 and the core network (e.g., the 5G-CN 110) may be referred to as Non-access Stratum (NAS).

The UEs 125 may include wireless transmission and reception means for communications with one or more nodes in the RAN, one or more relay nodes, or one or more other UEs, etc. Example of UEs include, but are not limited to, smartphones, tablets, laptops, computers, wireless transmission and/or reception units in a vehicle, V2X or Vehicle to Vehicle (V2V) devices, wireless sensors, IoT devices, IIOT devices, etc. Other names may be used for UEs such as a Mobile Station (MS), terminal equipment, terminal node, client device, mobile device, etc.

The RAN may include nodes (e.g., base stations) for communications with the UEs. For example, the NG-RAN 105 of the system of mobile communications 100 may comprise nodes for communications with the UEs 125. Different name for the RAN nodes may be used, for example depending on the RAT used for the RAN. A RAN node may be referred to as Node B (NB) in a RAN that used the UMTS RAT. A RAN node may be referred to as an evolved Node B (eNB) in a RAN that uses LTE/EUTRA RAT. For the illustrative example of the system of mobile communications 100 in FIG. 1, the nodes of an NG-RAN 105 may be either a next generation Node B (gNB) 115 or a next generation evolved Node B (ng-eNB) 120. In this specification, the terms base station, RAN node, gNB and ng-eNB may be used interchangeably. The gNB 115 may provide NR user plane and control plane protocol terminations towards the UE 125. The ng-eNB 120 may provide E-UTRA user plane and control plane protocol terminations towards the UE 125. An interface between the gNB 115 and the UE 125 or between the ng-eNB 120 and the UE 125 may be referred to as a Uu interface. The Uu interface may be established with a user plane protocol stack and a control plane protocol stack. For a Uu interface, the direction from the base station (e.g., the gNB 115 or the ng-eNB 120) to the UE 125 may be referred to as downlink and the direction from the UE 125 to the base station (e.g., gNB 115 or ng-eNB 120) may be referred to as uplink.

The gNBs 115 and ng-eNBs 120 may be interconnected with each other by means of an Xn interface. The Xn interface may comprise an Xn User plane (Xn-U) interface and an Xn Control plane (Xn-C) interface. The transport network layer of the Xn-U interface may be built on Internet Protocol (IP) transport and GPRS Tunneling Protocol (GTP) may be used on top of User Datagram Protocol (UDP)/IP to carry the user plane protocol data units (PDUs). Xn-U may provide non-guaranteed delivery of user plane PDUs and may support data forwarding and flow control. The transport network layer of the Xn-C interface may be built on Stream Control Transport Protocol (SCTP) on top of IP. The application layer signaling protocol may be referred to as XnAP (Xn Application Protocol). The SCTP layer may provide the guaranteed delivery of application layer messages. In the transport IP layer, point-to-point transmission may be used to deliver the signaling PDUs. The Xn-C interface may support Xn interface management, UE mobility management, including context transfer and RAN paging, and dual connectivity.

The gNBs 115 and ng-eNBs 120 may also be connected to the 5GC 110 by means of the NG interfaces, more specifically to an Access and Mobility Management Function (AMF) 130 of the 5GC 110 by means of the NG-C interface and to a User Plane Function (UPF) 135 of the 5GC 110 by means of the NG-U interface. The transport network layer of the NG-U interface may be built on IP transport and GTP protocol may be used on top of UDP/IP to carry the user plane PDUs between the NG-RAN node (e.g., gNB 115 or ng-eNB 120 ) and the UPF 135. NG-U may provide non-guaranteed delivery of user plane PDUs between the NG-RAN node and the UPF. The transport network layer of the NG-C interface may be built on IP transport. For the reliable transport of signaling messages, SCTP may be added on top of IP. The application layer signaling protocol may be referred to as NGAP (NG Application Protocol). The SCTP layer may provide guaranteed delivery of application layer messages. In the transport, IP layer point-to-point transmission may be used to deliver the signaling PDUs. The NG-C interface may provide the following functions: NG interface management; UE context management; UE mobility management; transport of NAS messages; paging; PDU Session Management; configuration transfer; and warning message transmission.

The gNB 115 or the ng-eNB 120 may host one or more of the following functions: Radio Resource Management functions such as Radio Bearer Control, Radio Admission Control, Connection Mobility Control, Dynamic allocation of resources to UEs in both uplink and downlink (e.g., scheduling); IP and Ethernet header compression, encryption and integrity protection of data; Selection of an AMF at UE attachment when no routing to an AMF can be determined from the information provided by the UE; Routing of User Plane data towards UPF(s); Routing of Control Plane information towards AMF; Connection setup and release; Scheduling and transmission of paging messages; Scheduling and transmission of system broadcast information (e.g., originated from the AMF); Measurement and measurement reporting configuration for mobility and scheduling; Transport level packet marking in the uplink; Session Management; Support of Network Slicing; QoS Flow management and mapping to data radio bearers; Support of UEs in RRC Inactive state; Distribution function for NAS messages; Radio access network sharing; Dual Connectivity; Tight interworking between NR and E-UTRA; and Maintaining security and radio configuration for User Plane 5G system (5GS) Cellular IoT (CIoT) Optimization.

The AMF 130 may host one or more of the following functions: NAS signaling termination; NAS signaling security; AS Security control; Inter CN node signaling for mobility between 3GPP access networks; Idle mode UE Reachability (including control and execution of paging retransmission); Registration Area management; Support of intra-system and inter-system mobility; Access Authentication; Access Authorization including check of roaming rights; Mobility management control (subscription and policies); Support of Network Slicing; Session Management Function (SMF) selection; Selection of 5GS CIoT optimizations.

The UPF 135 may host one or more of the following functions: Anchor point for Intra-/Inter-RAT mobility (when applicable); External PDU session point of interconnect to Data Network; Packet routing &, forwarding; Packet inspection and User plane part of Policy rule enforcement; Traffic usage reporting; Uplink classifier to support routing traffic flows to a data network; Branching point to support multi-homed PDU session; QoS handling for user plane, e.g. packet filtering, gating, UL/DL rate enforcement; Uplink Traffic verification (Service Data Flow (SDF) to QoS flow mapping); Downlink packet buffering and downlink data notification triggering.

As shown in FIG. 1, the NG-RAN 105 may support the PC5 interface between two UEs 125 (e.g., UE 125A and UE125B). In the PC5 interface, the direction of communications between two UEs (e.g., from UE 125A to UE 125B or vice versa) may be referred to as sidelink. Sidelink transmission and reception over the PC5 interface may be supported when the UE 125 is inside NG-RAN 105 coverage, irrespective of which RRC state the UE is in, and when the UE 125 is outside NG-RAN 105 coverage. Support of V2X services via the PC5 interface may be provided by NR sidelink communication and/or V2X sidelink communication.

PC5-S signaling may be used for unicast link establishment with Direct Communication Request/Accept message. A UE may self-assign its source Layer-2 ID for the PC5 unicast link for example based on the V2X service type. During unicast link establishment procedure, the UE may send its source Layer-2 ID for the PC5 unicast link to the peer UE, e.g., the UE for which a destination ID has been received from the upper layers. A pair of source Layer-2 ID and destination Layer-2 ID may uniquely identify a unicast link. The receiving UE may verify that the said destination ID belongs to it and may accept the Unicast link establishment request from the source UE. During the PC5 unicast link establishment procedure, a PC5-RRC procedure on the Access Stratum may be invoked for the purpose of UE sidelink context establishment as well as for AS layer configurations, capability exchange etc. PC5-RRC signaling may enable exchanging UE capabilities and AS layer configurations such as Sidelink Radio Bearer configurations between pair of UEs for which a PC5 unicast link is established.

NR sidelink communication may support one of three types of transmission modes (e.g., Unicast transmission, Groupcast transmission, and Broadcast transmission) for a pair of a Source Layer-2 ID and a Destination Layer-2 ID in the AS. The Unicast transmission mode may be characterized by: Support of one PC5-RRC connection between peer UEs for the pair; Transmission and reception of control information and user traffic between peer UEs in sidelink; Support of sidelink HARQ feedback; Support of sidelink transmit power control; Support of RLC Acknowledged Mode (AM); and Detection of radio link failure for the PC5-RRC connection. The Groupcast transmission may be characterized by: Transmission and reception of user traffic among UEs belonging to a group in sidelink; and Support of sidelink HARQ feedback. The Broadcast transmission may be characterized by: Transmission and reception of user traffic among UEs in sidelink.

A Source Layer-2 ID, a Destination Layer-2 ID and a PC5 Link Identifier may be used for NR sidelink communication. The Source Layer-2 ID may identify the sender of the data in NR sidelink communication. The Source Layer-2 ID may be 24 bits long and may be split in the MAC layer into two bit strings: One bit string may be the LSB part (8 bits) of Source Layer-2 ID and forwarded to physical layer of the sender. This may identify the source of the intended data in sidelink control information and may be used for filtering of packets at the physical layer of the receiver; and the Second bit string may be the MSB part (16 bits) of the Source Layer-2 ID and may be carried within the Medium Access Control (MAC) header. This may be used for filtering of packets at the MAC layer of the receiver. The Destination Layer-2 ID may identify the target of the data in NR sidelink communication. For NR sidelink communication, the Destination Layer-2 ID may be 24 bits long and may be split in the MAC layer into two bit strings: One bit string may be the LSB part (16 bits) of Destination Layer-2 ID and forwarded to physical layer of the sender. This may identify the target of the intended data in sidelink control information and may be used for filtering of packets at the physical layer of the receiver; and the Second bit string may be the MSB part (8 bits) of the Destination Layer-2 ID and may be carried within the MAC header. This may be used for filtering of packets at the MAC layer of the receiver. The PC5 Link Identifier may uniquely identify the PC5 unicast link in a UE for the lifetime of the PC5 unicast link. The PC5 Link Identifier may be used to indicate the PC5 unicast link whose sidelink Radio Link failure (RLF) declaration was made and PC5-RRC connection was released.

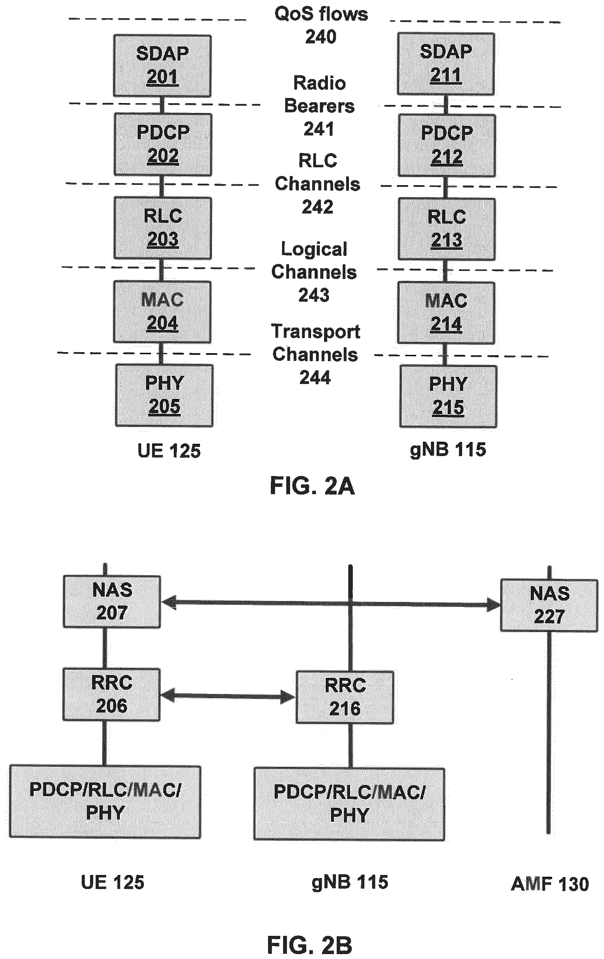

FIG. 2A and FIG. 2B show examples of radio protocol stacks for user plane and control plane, respectively, according to some aspects of some of various exemplary embodiments of the present disclosure. As shown in FIG. 2A, the protocol stack for the user plane of the Uu interface (between the UE 125 and the gNB 115) includes Service Data Adaptation Protocol (SDAP) 201 and SDAP 211, Packet Data Convergence Protocol (PDCP) 202 and PDCP 212, Radio Link Control (RLC) 203 and RLC 213, MAC 204 and MAC 214 sublayers of layer 2 and Physical (PHY) 205 and PHY 215 layer (layer 1 also referred to as L1).

The PHY 205 and PHY 215 offer transport channels 244 to the MAC 204 and MAC 214 sublayer. The MAC 204 and MAC 214 sublayer offer logical channels 243 to the RLC 203 and RLC 213 sublayer. The RLC 203 and RLC 213 sublayer offer RLC channels 242 to the PDCP 202 and PCP 212 sublayer. The PDCP 202 and PDCP 212 sublayer offer radio bearers 241 to the SDAP 201 and SDAP 211 sublayer. Radio bearers may be categorized into two groups: Data Radio Bearers (DRBs) for user plane data and Signaling Radio Bearers (SRBs) for control plane data. The SDAP 201 and SDAP 211 sublayer offers QoS flows 240 to 5GC.

The main services and functions of the MAC 204 or MAC 214 sublayer include: mapping between logical channels and transport channels; Multiplexing/demultiplexing of MAC Service Data Units (SDUs) belonging to one or different logical channels into/from Transport Blocks (TB) delivered to/from the physical layer on transport channels; Scheduling information reporting; Error correction through Hybrid Automatic Repeat Request (HARQ) (one HARQ entity per cell in case of carrier aggregation (CA)); Priority handling between UEs by means of dynamic scheduling; Priority handling between logical channels of one UE by means of Logical Channel Prioritization (LCP); Priority handling between overlapping resources of one UE; and Padding. A single MAC entity may support multiple numerologies, transmission timings and cells. Mapping restrictions in logical channel prioritization control which numerology(ies), cell(s), and transmission timing(s) a logical channel may use.

The HARQ functionality may ensure delivery between peer entities at Layer 1. A single HARQ process may support one TB when the physical layer is not configured for downlink/uplink spatial multiplexing, and when the physical layer is configured for downlink/uplink spatial multiplexing, a single HARQ process may support one or multiple TBs.

The RLC 203 or RLC 213 sublayer may support three transmission modes: Transparent Mode (TM); Unacknowledged Mode (UM); and Acknowledged Mode (AM). The RLC configuration may be per logical channel with no dependency on numerologies and/or transmission durations, and Automatic Repeat Request (ARQ) may operate on any of the numerologies and/or transmission durations the logical channel is configured with.

The main services and functions of the RLC 203 or RLC 213 sublayer depend on the transmission mode (e.g., TM, UM or AM) and may include:
Transfer of upper layer PDUs; Sequence numbering independent of the one in PDCP (UM and AM); Error Correction through ARQ (AM only);
Segmentation (AM and UM) and re-segmentation (AM only) of RLC SDUs;
Reassembly of SDU (AM and UM); Duplicate Detection (AM only); RLC SDU discard (AM and UM); RLC re-establishment; and Protocol error detection (AM only).

The automatic repeat request within the RLC 203 or RLC 213 sublayer may have the following characteristics: ARQ retransmits RLC SDUs or RLC SDU segments based on RLC status reports; Polling for RLC status report may be used when needed by RLC; RLC receiver may also trigger RLC status report after detecting a missing RLC SDU or RLC SDU segment.

The main services and functions of the PDCP 202 or PDCP 212 sublayer may include: Transfer of data (user plane or control plane);
Maintenance of PDCP Sequence Numbers (SNs); Header compression and decompression using the Robust Header Compression (ROHC) protocol;
Header compression and decompression using EHC protocol; Ciphering and deciphering; Integrity protection and integrity verification; Timer based SDU discard; Routing for split bearers; Duplication; Reordering and in-order delivery; Out-of-order delivery; and Duplicate discarding.

The main services and functions of SDAP 201 or SDAP 211 include:
Mapping between a QoS flow and a data radio bearer; and Marking QoS Flow ID (QFI) in both downlink and uplink packets. A single protocol entity of SDAP may be configured for each individual PDU session.

As shown in FIG. 2B, the protocol stack of the control plane of the Uu interface (between the UE 125 and the gNB 115) includes PHY layer (layer 1), and MAC, RLC and PDCP sublayers of layer 2 as described above and in addition, the RRC 206 sublayer and RRC 216 sublayer. The main services and functions of the RRC 206 sublayer and the RRC 216 sublayer over the Uu interface include: Broadcast of System Information related to AS and NAS; Paging initiated by 5GC or NG-RAN; Establishment, maintenance and release of an RRC connection between the UE and NG-RAN (including Addition, modification and release of carrier aggregation; and Addition, modification and release of Dual Connectivity in NR or between E-UTRA and NR); Security functions including key management; Establishment, configuration, maintenance and release of SRBs and DRBs; Mobility functions (including Handover and context transfer; UE cell selection and reselection and control of cell selection and reselection; and Inter-RAT mobility); QoS management functions; UE measurement reporting and control of the reporting; Detection of and recovery from radio link failure; and NAS message transfer to/from NAS from/to UE. The NAS 207 and NAS 227 layer is a control protocol (terminated in AMF on the network side) that performs the functions such as authentication, mobility management, security control, etc.

The sidelink specific services and functions of the RRC sublayer over the Uu interface include: Configuration of sidelink resource allocation via system information or dedicated signaling; Reporting of UE sidelink information; Measurement configuration and reporting related to sidelink; and Reporting of UE assistance information for SL traffic pattern(s).

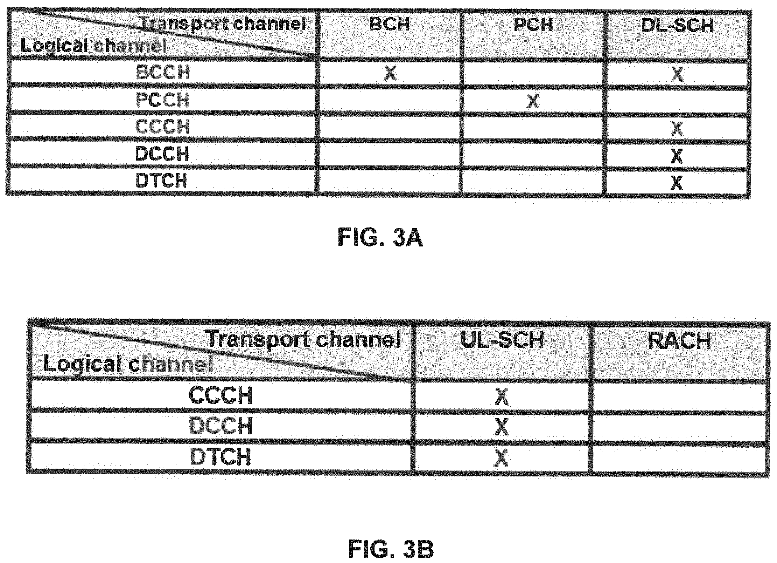

FIG. 3A, FIG. 3B and FIG. 3C show example mappings between logical channels and transport channels in downlink, uplink and sidelink, respectively, according to some aspects of some of various exemplary embodiments of the present disclosure. Different kinds of data transfer services may be offered by MAC. Each logical channel type may be defined by what type of information is transferred. Logical channels may be classified into two groups: Control Channels and Traffic Channels. Control channels may be used for the transfer of control plane information only. The Broadcast Control Channel (BCCH) is a downlink channel for broadcasting system control information. The Paging Control Channel (PCCH) is a downlink channel that carries paging messages. The Common Control Channel (CCCH) is channel for transmitting control information between UEs and network. This channel may be used for UEs having no RRC connection with the network. The Dedicated Control Channel (DCCH) is a point-to-point bi-directional channel that transmits dedicated control information between a UE and the network and may be used by UEs having an RRC connection. Traffic channels may be used for the transfer of user plane information only. The Dedicated Traffic Channel (DTCH) is a point-to-point channel, dedicated to one UE, for the transfer of user information. A DTCH may exist in both uplink and downlink. Sidelink Control Channel (SCCH) is a sidelink channel for transmitting control information (e.g., PC5-RRC and PC5-S messages) from one UE to other UE(s). Sidelink Traffic Channel (STCH) is a sidelink channel for transmitting user information from one UE to other UE(s). Sidelink Broadcast Control Channel (SBCCH) is a sidelink channel for broadcasting sidelink system information from one UE to other UE(s).

The downlink transport channel types include Broadcast Channel (BCH), Downlink Shared Channel (DL-SCH), and Paging Channel (PCH). The BCH may be characterized by: fixed, pre-defined transport format; and requirement to be broadcast in the entire coverage area of the cell, either as a single message or by beamforming different BCH instances. The DL-SCH may be characterized by: support for HARQ; support for dynamic link adaptation by varying the modulation, coding and transmit power; possibility to be broadcast in the entire cell; possibility to use beamforming; support for both dynamic and semi-static resource allocation; and the support for UE Discontinuous Reception (DRX) to enable UE power saving. The DL-SCH may be characterized by: support for HARQ; support for dynamic link adaptation by varying the modulation, coding and transmit power; possibility to be broadcast in the entire cell; possibility to use beamforming; support for both dynamic and semi-static resource allocation; support for UE discontinuous reception (DRX) to enable UE power saving. The PCH may be characterized by: support for UE discontinuous reception (DRX) to enable UE power saving (DRX cycle is indicated by the network to the UE); requirement to be broadcast in the entire coverage area of the cell, either as a single message or by beamforming different BCH instances; mapped to physical resources which can be used dynamically also for traffic/other control channels.

In downlink, the following connections between logical channels and transport channels may exist: BCCH may be mapped to BCH; BCCH may be mapped to DL-SCH; PCCH may be mapped to PCH; CCCH may be mapped to DL-SCH; DCCH may be mapped to DL-SCH; and DTCH may be mapped to DL-SCH.

The uplink transport channel types include Uplink Shared Channel (UL-SCH) and Random Access Channel(s) (RACH). The UL-SCH may be characterized by possibility to use beamforming; support for dynamic link adaptation by varying the transmit power and potentially modulation and coding; support for HARQ; support for both dynamic and semi-static resource allocation. The RACH may be characterized by limited control information; and collision risk.

In Uplink, the following connections between logical channels and transport channels may exist: CCCH may be mapped to UL-SCH; DCCH may be mapped to UL- SCH; and DTCH may be mapped to UL-SCH.

The sidelink transport channel types include: Sidelink broadcast channel (SL-BCH) and Sidelink shared channel (SL-SCH). The SL-BCH may be characterized by pre-defined transport format. The SL-SCH may be characterized by support for unicast transmission, groupcast transmission and broadcast transmission; support for both UE autonomous resource selection and scheduled resource allocation by NG-RAN; support for both dynamic and semi-static resource allocation when UE is allocated resources by the NG-RAN; support for HARQ; and support for dynamic link adaptation by varying the transmit power, modulation and coding.

In the sidelink, the following connections between logical channels and transport channels may exist: SCCH may be mapped to SL-SCH; STCH may be mapped to SL-SCH; and SBCCH may be mapped to SL-BCH.

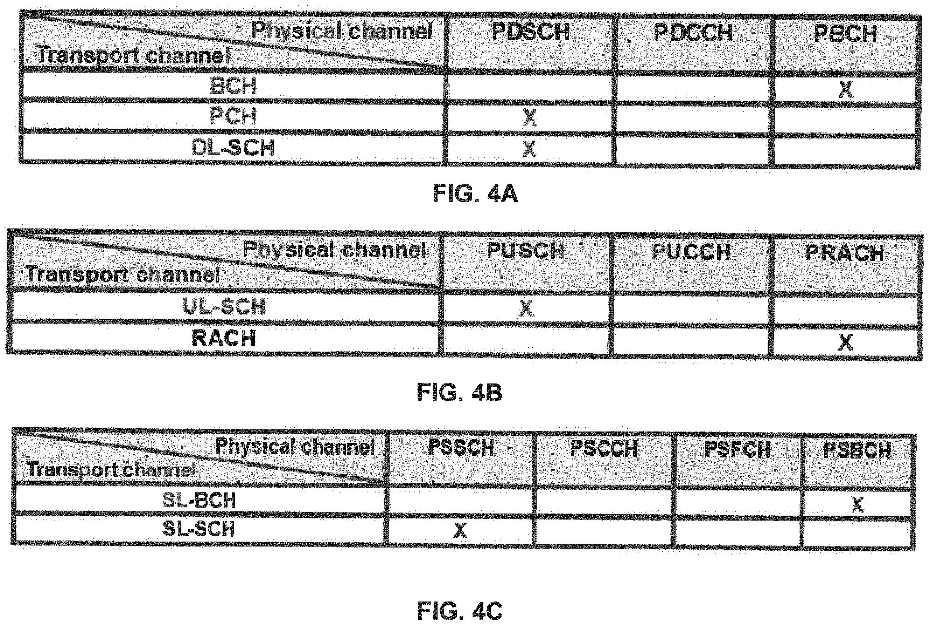

FIG. 4A, FIG. 4B and FIG. 4C show example mappings between transport channels and physical channels in downlink, uplink and sidelink, respectively, according to some aspects of some of various exemplary embodiments of the present disclosure. The physical channels in downlink include Physical Downlink Shared Channel (PDSCH), Physical Downlink Control Channel (PDCCH) and Physical Broadcast Channel (PBCH). The PCH and DL-SCH transport channels are mapped to the PDSCH. The BCH transport channel is mapped to the PBCH. A transport channel is not mapped to the PDCCH but Downlink Control Information (DCI) is transmitted via the PDCCH.

The physical channels in the uplink include Physical Uplink Shared Channel (PUSCH), Physical Uplink Control Channel (PUCCH) and Physical Random Access Channel (PRACH). The UL-SCH transport channel may be mapped to the PUSCH and the RACH transport channel may be mapped to the PRACH. A transport channel is not mapped to the PUCCH but Uplink Control Information (UCI) is transmitted via the PUCCH.

The physical channels in the sidelink include Physical Sidelink Shared Channel (PSSCH), Physical Sidelink Control Channel (PSCCH), Physical Sidelink Feedback Channel (PSFCH) and Physical Sidelink Broadcast Channel (PSBCH). The Physical Sidelink Control Channel (PSCCH) may indicate resource and other transmission parameters used by a UE for PSSCH. The Physical Sidelink Shared Channel (PSSCH) may transmit the TBs of data themselves, and control information for HARQ procedures and CSI feedback triggers, etc. At least 6 OFDM symbols within a slot may be used for PSSCH transmission. Physical Sidelink Feedback Channel (PSFCH) may carry the HARQ feedback over the sidelink from a UE which is an intended recipient of a PSSCH transmission to the UE which performed the transmission. PSFCH sequence may be transmitted in one PRB repeated over two OFDM symbols near the end of the sidelink resource in a slot. The SL-SCH transport channel may be mapped to the PSSCH. The SL-BCH may be mapped to PSBCH. No transport channel is mapped to the PSFCH but Sidelink Feedback Control Information (SFCI) may be mapped to the PSFCH. No transport channel is mapped to PSCCH but Sidelink Control Information (SCI) may be mapped to the PSCCH.

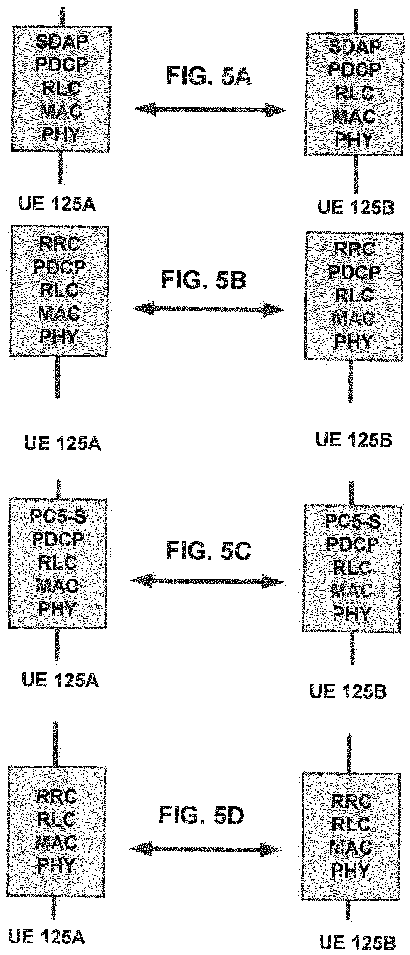

FIG. 5A, FIG. 5B, FIG. 5C and FIG. 5D show examples of radio protocol stacks for NR sidelink communication according to some aspects of some of various exemplary embodiments of the present disclosure. The AS protocol stack for user plane in the PC5 interface (i.e., for STCH) may consist of SDAP, PDCP, RLC and MAC sublayers, and the physical layer. The protocol stack of user plane is shown in FIG. 5A. The AS protocol stack for SBCCH in the PC5 interface may consist of RRC, RLC, MAC sublayers, and the physical layer as shown below in FIG. 5B. For support of PC5-S protocol, PC5-S is located on top of PDCP, RLC and MAC sublayers, and the physical layer in the control plane protocol stack for SCCH for PC5-S, as shown in FIG. 5C. The AS protocol stack for the control plane for SCCH for RRC in the PC5 interface consists of RRC, PDCP, RLC and MAC sublayers, and the physical layer. The protocol stack of control plane for SCCH for RRC is shown in FIG. 5D.

The Sidelink Radio Bearers (SLRBs) may be categorized into two groups: Sidelink Data Radio Bearers (SL DRB) for user plane data and Sidelink Signaling Radio Bearers (SL SRB) for control plane data. Separate SL SRBs using different SCCHs may be configured for PC5-RRC and PC5-S signaling, respectively.

The MAC sublayer may provide the following services and functions over the PC5 interface: Radio resource selection; Packet filtering; Priority handling between uplink and sidelink transmissions for a given UE; and Sidelink CSI reporting. With logical channel prioritization restrictions in MAC, only sidelink logical channels belonging to the same destination may be multiplexed into a MAC PDU for every unicast, groupcast and broadcast transmission which may be associated to the destination. For packet filtering, a SL-SCH MAC header including portions of both Source Layer-2 ID and a Destination Layer-2 ID may be added to a MAC PDU. The Logical Channel Identifier (LCID) included within a MAC subheader may uniquely identify a logical channel within the scope of the Source Layer-2 ID and Destination Layer-2 ID combination.

The services and functions of the RLC sublayer may be supported for sidelink. Both RLC Unacknowledged Mode (UM) and Acknowledged Mode (AM) may be used in unicast transmission while only UM may be used in groupcast or broadcast transmission. For UM, only unidirectional transmission may be supported for groupcast and broadcast.

The services and functions of the PDCP sublayer for the Uu interface may be supported for sidelink with some restrictions: Out-of-order delivery may be supported only for unicast transmission; and Duplication may not be supported over the PC5 interface.

The SDAP sublayer may provide the following service and function over the PC5 interface: Mapping between a QoS flow and a sidelink data radio bearer. There may be one SDAP entity per destination for one of unicast, groupcast and broadcast which is associated to the destination.

The RRC sublayer may provide the following services and functions over the PC5 interface: Transfer of a PC5-RRC message between peer UEs; Maintenance and release of a PC5-RRC connection between two UEs; and Detection of sidelink radio link failure for a PC5-RRC connection based on indication from MAC or RLC. A PC5-RRC connection may be a logical connection between two UEs for a pair of Source and Destination Layer-2 IDs which may be considered to be established after a corresponding PC5 unicast link is established. There may be one-to-one correspondence between the PC5-RRC connection and the PC5 unicast link. A UE may have multiple PC5-RRC connections with one or more UEs for different pairs of Source and Destination Layer-2 IDs. Separate PC5-RRC procedures and messages may be used for a UE to transfer UE capability and sidelink configuration including SL-DRB configuration to the peer UE. Both peer UEs may exchange their own UE capability and sidelink configuration using separate bi-directional procedures in both sidelink directions.

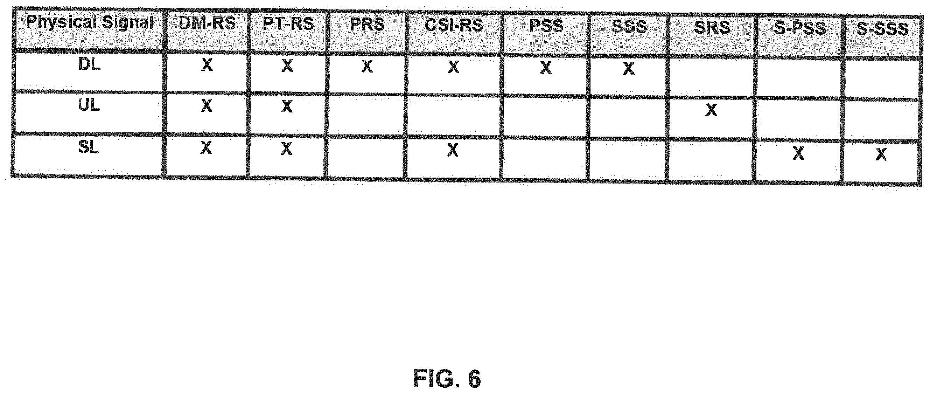

FIG. 6 shows example physical signals in downlink, uplink and sidelink according to some aspects of some of various exemplary embodiments of the present disclosure. The Demodulation Reference Signal (DM-RS) may be used in downlink, uplink and sidelink and may be used for channel estimation. DM-RS is a UE-specific reference signal and may be transmitted together with a physical channel in downlink, uplink or sidelink and may be used for channel estimation and coherent detection of the physical channel. The Phase Tracking Reference Signal (PT-RS) may be used in downlink, uplink and sidelink and may be used for tracking the phase and mitigating the performance loss due to phase noise. The PT-RS may be used mainly to estimate and minimize the effect of Common Phase Error (CPE) on system performance. Due to the phase noise properties, PT-RS signal may have a low density in the frequency domain and a high density in the time domain. PT-RS may occur in combination with DM-RS and when the network has configured PT-RS to be present. The Positioning Reference Signal (PRS) may be used in downlink for positioning using different positioning techniques. PRS may be used to measure the delays of the downlink transmissions by correlating the received signal from the base station with a local replica in the receiver. The Channel State Information Reference Signal (CSI-RS) may be used in downlink and sidelink. CSI-RS may be used for channel state estimation, Reference Signal Received Power (RSRP) measurement for mobility and beam management, time/frequency tracking for demodulation among other uses. CSI-RS may be configured UE-specifically but multiple users may share the same CSI-RS resource. The UE may determine CSI reports and transit them in the uplink to the base station using PUCCH or PUSCH. The CSI report may be carried in a sidelink MAC CE. The Primary Synchronization Signal (PSS) and the Secondary Synchronization Signal (SSS) may be used for radio fame synchronization. The PSS and SSS may be used for the cell search procedure during the initial attach or for mobility purposes. The Sounding Reference Signal (SRS) may be used in uplink for uplink channel estimation. Similar to CSI-RS, the SRS may serve as QCL reference for other physical channels such that they can be configured and transmitted quasi-collocated with SRS. The Sidelink PSS (S-PSS) and Sidelink SSS (S-SSS) may be used in sidelink for sidelink synchronization.

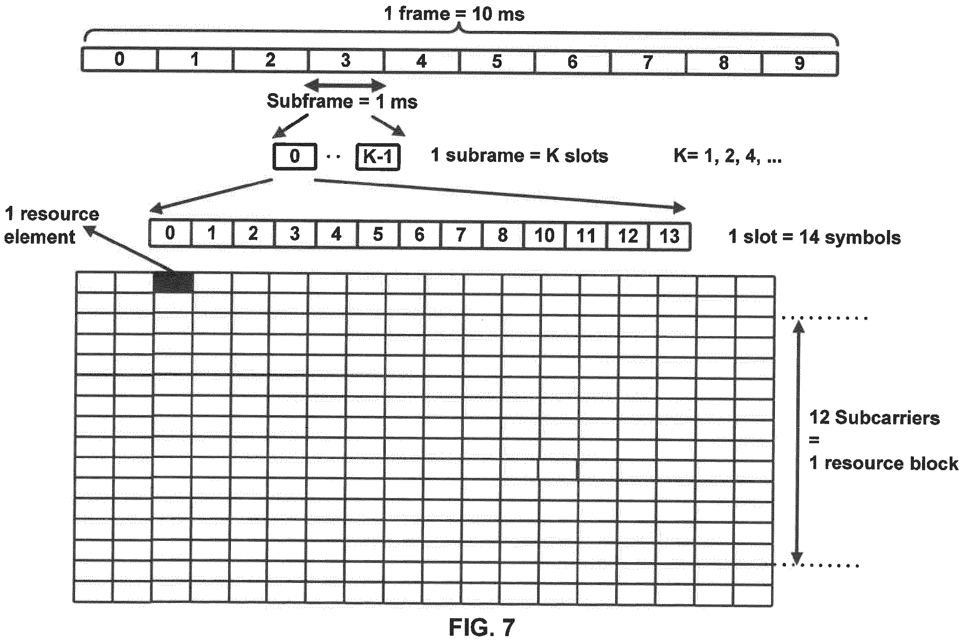

FIG. 7 shows example frame structure and physical resources according to some aspects of some of various exemplary embodiments of the present disclosure. The downlink or uplink or sidelink transmissions may be organized into frames with 10 ms duration, consisting of ten 1 ms subframes. Each subframe may consist of 1, 2, 4, ... slots, wherein the number of slots per subframe may depend of the subcarrier spacing of the carrier on which the transmission takes place. The slot duration may be 14 symbols with Normal Cyclic Prefix (CP) and 12 symbols with Extended CP and may scale in time as a function of the used sub-carrier spacing so that there is an integer number of slots in a subframe. FIG. 7 shows a resource grid in time and frequency domain. Each element of the resource grid, comprising one symbol in time and one subcarrier in frequency, is referred to as a Resource Element (RE). A Resource Block (RB) may be defined as 12 consecutive subcarriers in the frequency domain.

In some examples and with non-slot-based scheduling, the transmission of a packet may occur over a portion of a slot, for example during 2, 4 or 7 OFDM symbols which may also be referred to as mini-slots. The mini-slots may be used for low latency applications such as URLLC and operation in unlicensed bands. In some embodiments, the mini-slots may also be used for fast flexible scheduling of services (e.g., pre-emption of URLLC over eMBB).

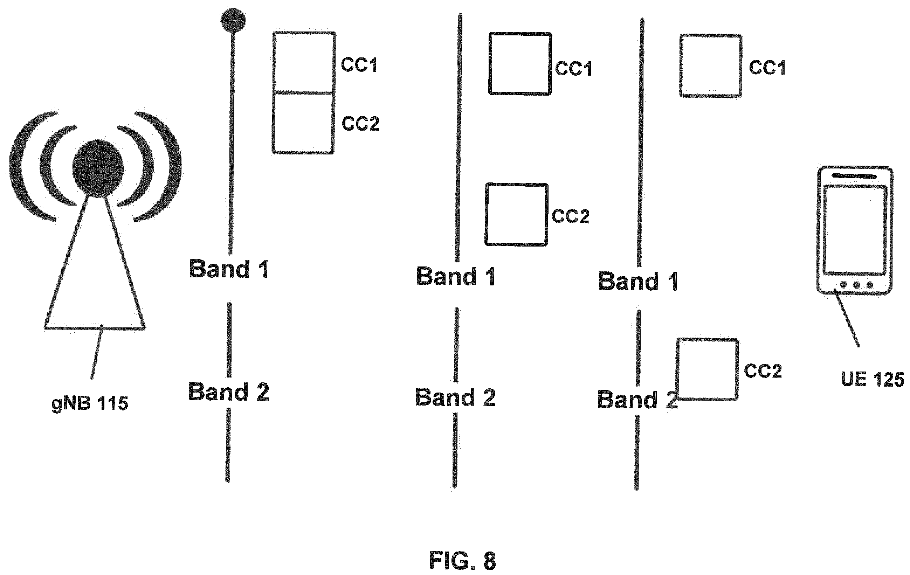

FIG. 8 shows example component carrier configurations in different carrier aggregation scenarios according to some aspects of some of various exemplary embodiments of the present disclosure. In Carrier Aggregation (CA), two or more Component Carriers (CCs) may be aggregated. A UE may simultaneously receive or transmit on one or multiple CCs depending on its capabilities. CA may be supported for both contiguous and non-contiguous CCs in the same band or on different bands as shown in FIG. 8. A gNB and the UE may communicate using a serving cell. A serving cell may be associated at least with one downlink CC (e.g., may be associated only with one downlink CC or may be associated with a downlink CC and an uplink CC). A serving cell may be a Primary Cell (PCell) or a Secondary cCell (SCell).

A UE may adjust the timing of its uplink transmissions using an uplink timing control procedure. A Timing Advance (TA) may be used to adjust the uplink frame timing relative to the downlink frame timing. The gNB may determine the desired Timing Advance setting and provides that to the UE. The UE may use the provided TA to determine its uplink transmit timing relative to the UE's observed downlink receive timing.

In the RRC Connected state, the gNB may be responsible for maintaining the timing advance to keep the L1 synchronized. Serving cells having uplink to which the same timing advance applies and using the same timing reference cell are grouped in a Timing Advance Group (TAG). A TAG may contain at least one serving cell with configured uplink. The mapping of a serving cell to a TAG may be configured by RRC. For the primary TAG, the UE may use the PCell as timing reference cell, except with shared spectrum channel access where an SCell may also be used as timing reference cell in certain cases. In a secondary TAG, the UE may use any of the activated SCells of this TAG as a timing reference cell and may not change it unless necessary.

Timing advance updates may be signaled by the gNB to the UE via MAC CE commands. Such commands may restart a TAG-specific timer which may indicate whether the L1 can be synchronized or not: when the timer is running, the L1 may be considered synchronized, otherwise, the L1 may be considered non-synchronized (in which case uplink transmission may only take place on PRACH).

A UE with single timing advance capability for CA may simultaneously receive and/or transmit on multiple CCs corresponding to multiple serving cells sharing the same timing advance (multiple serving cells grouped in one TAG). A UE with multiple timing advance capability for CA may simultaneously receive and/or transmit on multiple CCs corresponding to multiple serving cells with different timing advances (multiple serving cells grouped in multiple TAGs). The NG-RAN may ensure that each TAG contains at least one serving cell. A non-CA capable UE may receive on a single CC and may transmit on a single CC corresponding to one serving cell only (one serving cell in one TAG).

The multi-carrier nature of the physical layer in case of CA may be exposed to the MAC layer and one HARQ entity may be required per serving cell. When CA is configured, the UE may have one RRC connection with the network. At RRC connection establishment/re-establishment/handover, one serving cell (e.g., the PCell) may provide the NAS mobility information. Depending on UE capabilities, SCells may be configured to form together with the PCell a set of serving cells. The configured set of serving cells for a UE may consist of one PCell and one or more SCells. The reconfiguration, addition and removal of SCells may be performed by RRC.

In a dual connectivity scenario, a UE may be configured with a plurality of cells comprising a Master Cell Group (MCG) for communications with a master base station, a Secondary Cell Group (SCG) for communications with a secondary base station, and two MAC entities: one MAC entity and for the MCG for communications with the master base station and one MAC entity for the SCG for communications with the secondary base station.

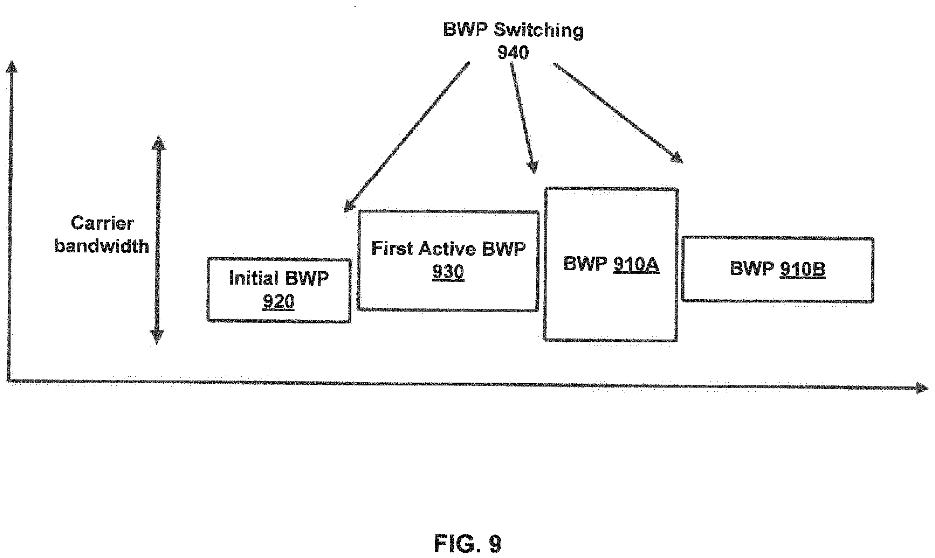

FIG. 9 shows example bandwidth part configuration and switching according to some aspects of some of various exemplary embodiments of the present disclosure. The UE may be configured with one or more Bandwidth Parts (BWPs) 910 on a given component carrier. In some examples, one of the one or more bandwidth parts may be active at a time. The active bandwidth part may define the UE's operating bandwidth within the cell's operating bandwidth. For initial access, and until the UE's configuration in a cell is received, initial bandwidth part 920 determined from system information may be used. With Bandwidth Adaptation (BA), for example through BWP switching 940, the receive and transmit bandwidth of a UE may not be as large as the bandwidth of the cell and may be adjusted. For example, the width may be ordered to change (e.g., to shrink during period of low activity to save power); the location may move in the frequency domain (e.g., to increase scheduling flexibility); and the subcarrier spacing may be ordered to change (e.g., to allow different services). The first active BWP 920 may be the active BWP upon RRC (reconfiguration for a PCell or activation of an SCell.

For a downlink BWP or uplink BWP in a set of downlink BWPs or uplink BWPs, respectively, the UE may be provided the following configuration parameters: a Subcarrier Spacing (SCS); a cyclic prefix; a common RB and a number of contiguous RBs; an index in the set of downlink BWPs or uplink BWPs by respective BWP-Id; a set of BWP-common and a set of BWP-dedicated parameters. A BWP may be associated with an OFDM numerology according to the configured subcarrier spacing and cyclic prefix for the BWP. For a serving cell, a UE may be provided by a default downlink BWP among the configured downlink BWPs. If a UE is not provided a default downlink BWP, the default downlink BWP may be the initial downlink BWP.

A downlink BWP may be associated with a BWP inactivity timer. If the BWP inactivity timer associated with the active downlink BWP expires and if the default downlink BWP is configured, the UE may perform BWP switching to the default BWP. If the BWP inactivity timer associated with the active downlink BWP expires and if the default downlink BWP is not configured, the UE may perform BWP switching to the initial downlink BWP.

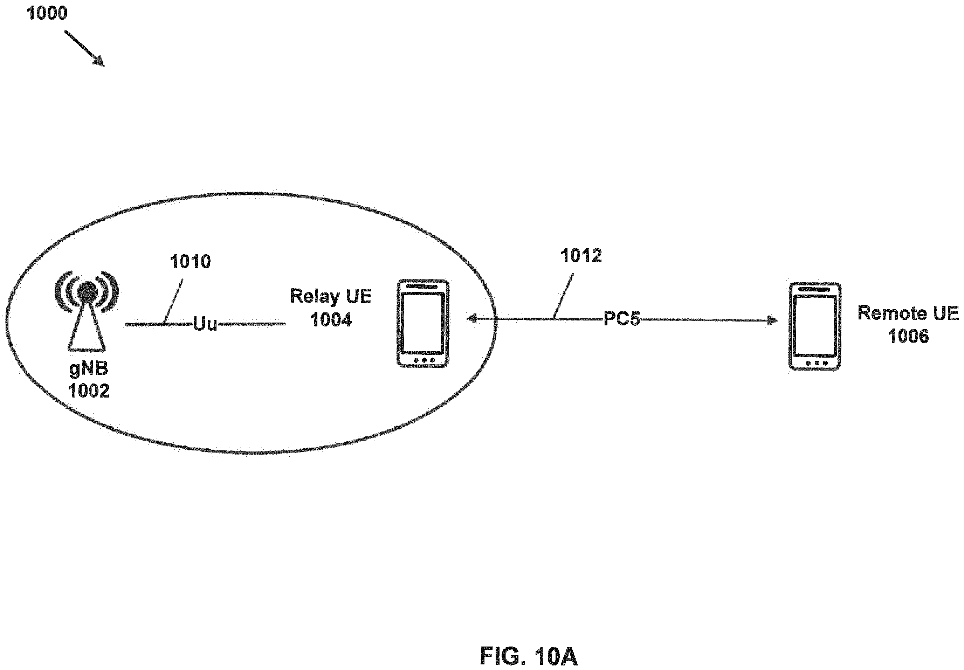

FIG. 10A shows example of sidelink communication scheme 1000 with resource sharing capability between a relay UE and a remote UE according to some aspects of the present disclosure. The scheme 1000 may be employed by UEs 125A-B in a network such as networks 100 for sidelink communications. In particular, sidelink UEs may employ scheme 1000 for transmission and reception of Sidelink Control Information (SCI) and sidelink data over the forward/backward sidelink links 1012. For example, the relay UE 1004 may transmit SCI/sidelink data over the forward link to the remote UE 1006, and the remote UE 1006 may transmit SCI/sidelink data over the backward link to the relay UE 1004. In the scheme 1000, a relay UE 1004 within the coverage area of gNB 1002 and in communication with gNB 1002 over the link 1010, may operate as a relay for the remote UE 1006. For instance, the UE 1004 may relay DL SCI/Data from the gNB 1002 to the UE 1006 over link 1012, and/or UL SCI/Data from UE 1006 to gNB 1002 over link 1012. gNB 1002 may be similar to the gNB 115A-B. The relay UE 1004 may be similar to the relay UE 125A, and the remote UE 1006, 1034 may be similar to the remote UE 125B.

In the scheme 1000, the relay UE 1004 may communicate with the remote UE 1006 using a resource pool. In some scenarios , the relay UE 1004 may share its resource pool with the remote UE 1006. In some examples, the resource pool may be pre-configured by gNB 1002 or the relay UE 1004 and may be indicated to the remote UE 1006 via relay UE 1004.

In some scenarios (e.g., Unlicensed Spectrum(UL)), relay UE 1004 may trigger a Listen-Before-talk process to access wireless channel 1010 between gNB 1002 and relay UE 1004, and requests for allocation of time and frequency resources. Remote UE 1006, which is in communication range of UE 1004, may request grant of resources from UE 1004 for the transmission or reception of data to/from UE 1004 and gNB 1002. The UE 1004 may share part of its allocated resource from gNB 1002 with UE 1006. For example, UE 1004 may request for allocation of Channel Occupancy Time (COT) from gNB 1002, and gNB may schedule UE 1004 with the COT. UE 1004 may use part of the schedule COT and may share other part to remote UE 1006. In the above examples, UE 1004 that initiate the COT is the COT initiator; UE 1004 that shares the COT is the COT donor; UE 1006 that receives the COT is the COT recipient.

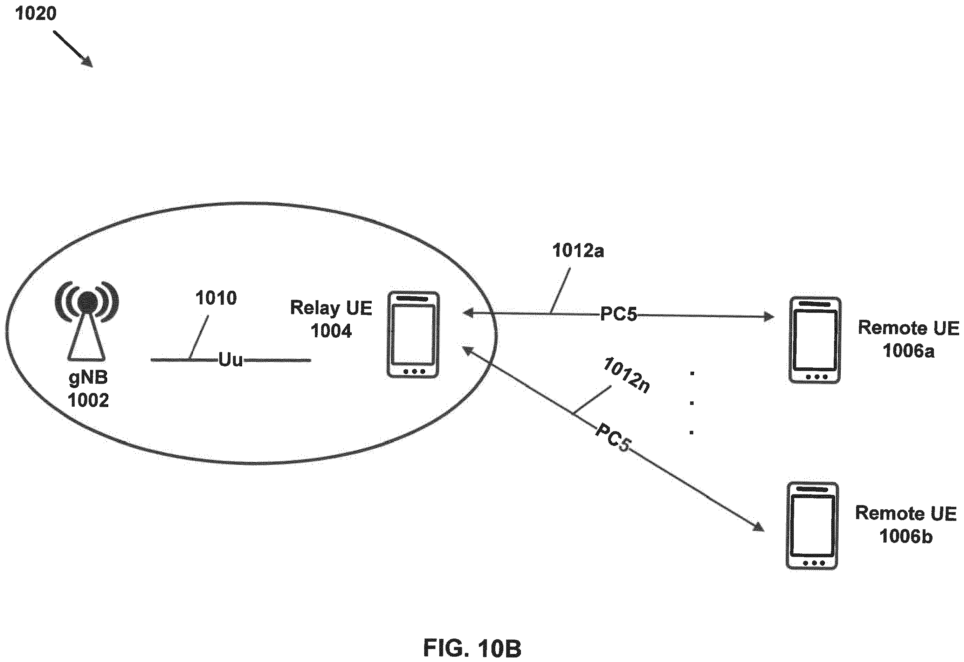

FIG. 10B shows example of sidelink communication scheme 1020 with resource sharing capability between a relay UE and one or more remote UEs according to some aspects of the present disclosure. The scheme 1020 may be employed by UEs 125A-B in a network such as networks 100 for sidelink communications. In particular, sidelink UEs may employ scheme 1020 for transmission and reception of Sidelink Control Information (SCI) and sidelink data over the forward/backward sidelink links 1012a, ...,1012n. For example, relay UE 1004 may transmit SCI/sidelink data over the forward link to the remote UEs 1006a, ...,1006n, and the remote UEs 1006a, ...,1006n may transmit SCI/sidelink data over the backward link to the relay UE 1004. In the scheme 1020, relay UE 1004 within the coverage area of gNB 1002 and in communication with gNB 1002 over the link 1010, may operate as a relay for the remote UE 1006. For instance, the UE 1004 may relay DL SCI/Data from the gNB 1002 to the UE 1006 over link 1012a,...,1012n, and/or UL SCI/Data from UE 1006 to gNB 1002 over link 1012a, ...,1012n. gNB 1002 may be similar to the gNB 115A-B. The relay UE 1004 may be similar to the relay UE 125A, and the remote UE 1006 may be similar to the remote UE 125B.

In the scheme 1020, the relay UE 1004 may communicate with the remote UE 1006 using a resource pool. In some scenarios, relay UE 1004 may share its resource pool with the remote UE 1006a, ..., 1006n. In some examples, the resource pool may be pre-configured by gNB 1002 or the relay UE 1004 and may be indicated to the remote UE 1006 via relay UE 1004.

In some scenarios (e.g., Unlicensed Spectrum (UL)), relay UE 1004 may trigger a Listen-Before-talk process to access wireless channel 1010 between gNB 1002 and relay UE 1004, and requests for allocation of time and frequency resources. One or more of remote UEs 1006a, ..., 1006n, which are in communication range of UE 1004, may request grant of resources from UE 1004 for the transmission or reception of data to/from UE 1004 and gNB 1002. The UE 1004 may share part of its allocated resource from gNB 1002 with one or more of UE 1006a, ..., 1006n. For example, UE 1004 may request for allocation of Channel Occupancy Time (COT) from gNB 1002, and gNB may schedule UE 1004 with the COT. UE 1004 may use part of the schedule COT and may share other part to one or more of remote UEs 1006a, ..., 1006n. In the above examples, UE 1004 that initiate the COT is the COT initiator; UE 1004 that share the COT is the COT donor; One or more of UEs 1006a, ...,1006n that receive the COT are the COT recipients.

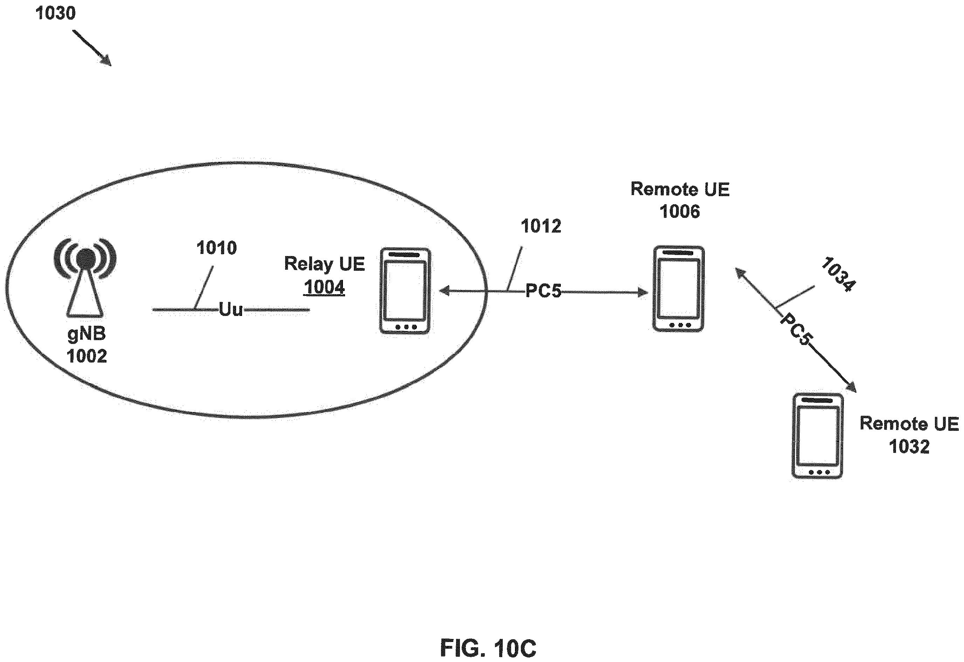

FIG. 10C shows example of sidelink communication scheme 1030 with resource sharing capability between a remote UE and another remote UE according to some aspects of the present disclosure. The scheme 1030 may be employed by UEs 125A-B in a network such as networks 100 for sidelink communications. In particular, sidelink UEs may employ scheme 1030 for transmission and reception of Sidelink Control Information (SCI) and sidelink data over the forward/backward sidelink links 1012, 1034. For example, relay UE 1004 may transmit SCI/sidelink data over the forward link to the remote UE 1006, and the remote UE 1006 may transmit SCI/sidelink data over the backward link to the relay UE 1004. Furthermore, remote UE 1006 may transmit or receive SCI/SL data to/from remote UE 1032 via link 1034.

As shown, the UE 1004 may relay DL SCI/Data from the gNB 1002 to the UE 1006 over link 1012, and/or UL SCI/Data from UE 1006 to gNB 1002 over link 1012. gNB 1002 may be similar to the gNB 115A-B. The relay UE 1004 may be similar to the relay UE 125A, and the remote UE 1006 may be similar to the remote UE 125B. Furthermore, UE 1032 that is in communication range of UE 1006, may transmit or receive SCI/sidelink data to/from UE 1006 via link 1034. In the scheme 1030, a relay UE 1004 within the coverage area of gNB 1002 and in communication with gNB 1002 over the link 1010, may operate as a relay for the remote UE 1006. Furthermore, UE 1032 that is in communication range of UE 1006, may transmit or receive SCI/sidelink data to/from UE 1006 via link 1034.

In the scheme 1030, relay UE 1004 may communicate with the remote UE 1006 using a resource pool, and UE 1006 may communicate with UE 1034 using another resource pool. In some scenarios , the relay UE 1004 may share its resource pool with the remote UE 1006, and UE 1006 may share its resource pool with UE 1032. In some examples, the resource pool may be pre-configured by gNB 1002 or the relay UE 1004 and may be indicated to the remote UEs 1006 and 1032 via relay UE 1004.

In some scenarios (e.g., Unlicensed Spectrum(UL)), relay UE 1004 may trigger a Listen-Before-talk process to access wireless channel 1010 between gNB 1002 and relay UE 1004, and requests for allocation of time and frequency resources. Remote UE 1006, which is in communication range of UE 1004, may request grant of resources from relay UE 1004 for the transmission or reception of data to/from UE 1004 and gNB 1002. Relay UE 1004 may share part of its allocated resource from gNB 1002 with remote UE 1006. For example, UE 1004 may request for allocation of Channel Occupancy Time (COT) from gNB 1002, and gNB may schedule UE 1004 with the COT. UE 1004 may use part of the schedule COT and may share other part to remote UE 1006. Furthermore, remote UE 1032, which is in communication range of remote UE 1006, may request grant of resources from remote UE 1006 for the transmission or reception of data to/from UE 1006, and gNB 1002. Accordingly, remote UE 1006 may share part of its allocated resource from UE 1004 with remote UE 1032.

In the above examples, UE 1004 that initiate the COT is the COT initiator; UE 1004, 1006 that share the COT is the COT donor; UEs 1006, 1032 that receive the COT are the COT recipients.

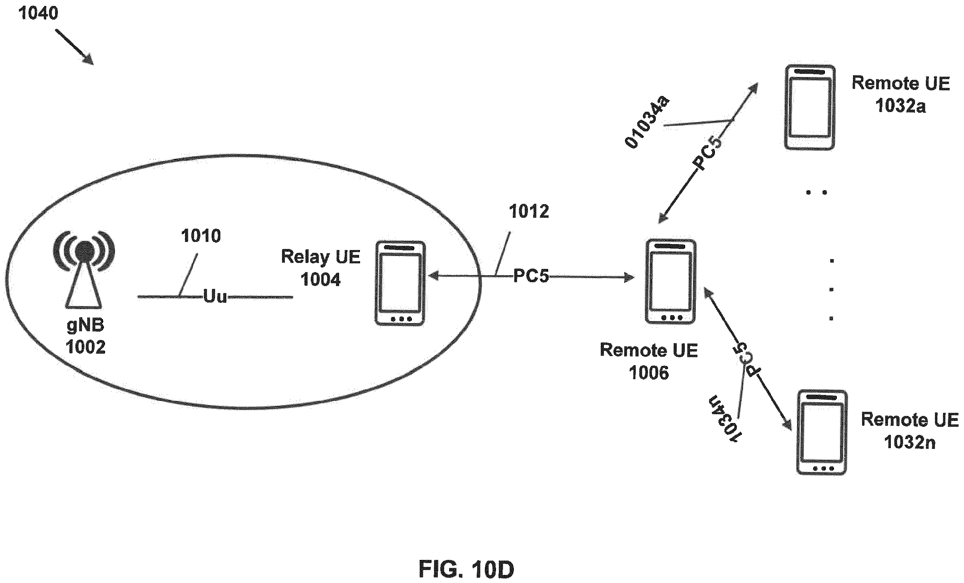

FIG. 10D shows example of sidelink communication scheme 1040 with resource sharing capability between a remote UE and one or more remote UEs according to some aspects of the present disclosure. The scheme 1040 may be employed by UEs 125A-B in a network such as networks 100 for sidelink communications. In particular, sidelink UEs may employ scheme 1040 for transmission and reception of Sidelink Control Information (SCI) and sidelink data over the forward/backward sidelink links 1012, 1034a, ...,1034n. For example, relay UE 1004 may transmit SCI/sidelink data over the forward link to the remote UE 1006, and the remote UE 1006 may transmit SCI/sidelink data over the backward link to the relay UE 1004. Furthermore, remote UE 1006 may transmit or receive SCI/SL data to/from remote UEs 1032 via links 1034a-n.

As shown, the UE 1004 may relay DL SCI/Data from the gNB 1002 to UE 1006 over link 1012, and/or UL SCI/Data from UE 1006 to gNB 1002 over link 1012. gNB 1002 may be similar to the gNB 115A-B. The relay UE 1004 may be similar to the relay UE 125A, and the remote UEs 1006, 1034a-n may be similar to the remote UE 125B. Furthermore, UEs 1032a-n that are in communication range of UE 1006, may transmit or receive SCI/sidelink data to/from UE 1006 via links 1034a-n. In the scheme 1040, a relay UE 1004 within the coverage area of gNB 1002 and in communication with gNB 1002 over the link 1010, may operate as a relay for the remote UE 1006. Furthermore, UE 1032 that is in communication range of UE 1006, may transmit or receive SCI/sidelink data to/from UE 1006 via link 1034.

In the scheme 1040, relay UE 1004 may communicate with the remote UE 1006 using a resource pool, and UE 1006 may communicate with UEs 1034a-n using another resource pool. In some scenarios , the relay UE 1004 may share its resource pool with the remote UE 1006, and UE 1006 may share its resource pool with UE 1032a-n. In some examples, the resource pool may be pre-configured by gNB 1002 or the relay UE 1004 and may be indicated to the remote UEs 1006 and 1032a-n via relay UE 1004.

In some scenarios (e.g., Unlicensed Spectrum(UL)), relay UE 1004 may trigger a Listen-Before-talk process to access wireless channel 1010 between gNB 1002 and relay UE 1004, and requests for allocation of time and frequency resources. Remote UE 1006, which is in communication range of UE 1004, may request grant of resources from relay UE 1004 for the transmission or reception of data to/from UE 1004 and gNB 1002. Relay UE 1004 may share part of its allocated resource from gNB 1002 with remote UE 1006. For example, UE 1004 may request for allocation of Channel Occupancy Time (COT) from gNB 1002, and gNB may schedule UE 1004 with the COT. UE 1004 may use part of the schedule COT and may share other part to remote UE 1006. Furthermore, one or more of remote UEs 1032a-n, which are in communication range of remote UE 1006, may request grant of resources from remote UE 1006 for the transmission or reception of data to/from UE 1006, and gNB 1002. Accordingly, remote UE 1006 may share part of its allocated resource from UE 1004 with one or more of remote UEs 1032a-n.

In the above examples, UE 1004 that initiate the COT is the COT initiator; UE 1004, 1006 that share the COT is the COT donor; UEs 1006, 1032a-n that receive the COT are the COT recipients.

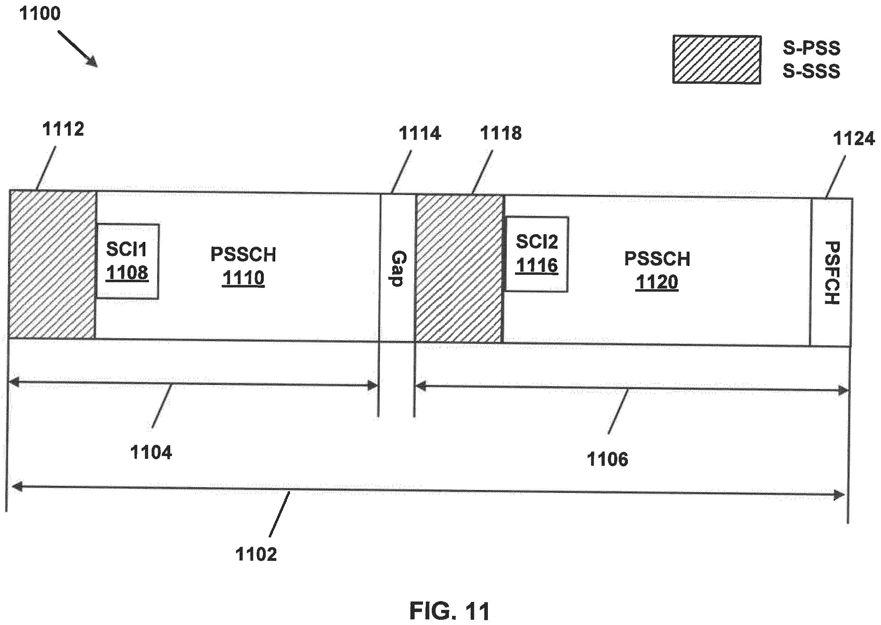

FIG. 11 shows an example illustrating COT resources in time domain according to some aspects of some of various exemplary embodiments of the present disclosure. The scheme 1100 may be employed by UEs 125A-B in a network such as networks 100 for sidelink communications. In particular, sidelink UEs may employ the scheme 1100 for SCI/SL data communication over the sidelink forward/ backward links. In some aspects, the scheme 1100 can be employed in conjunction with the scheme 1000, 1010, 1020, 1030, 1040 of FIG. 10A-D. In FIG. 1100, the x-axis represents time in some arbitrary units, and the y-axis represents frequency in some arbitrary units. The sidelink COT 1100 may be over a licensed band or a shared radio frequency band (e.g., in an unlicensed band). The COT 1100 may have the same frame structure 700 shown in FIG. 7. For instance, the COT 1100 may include a set of sidelink resource pool for a relay UE (e.g., relay UE 1004) with reference to FIG. 10A-D, arranged in a number of slots across time and a number of subbands in frequency similar to the resource 700 shown in FIG. 7. The scheduled COT 1100 may include one or more slots (e.g., 110, 1120). The COT shown in FIG. 11 includes two slots 1104, 1106, sidelink synchronization signals SSS 1112, 1118 (SL Primary Synchronization S-PSS and SL Secondary Synchronization Signal S-SSS), SCI1 1108, SCI2 1120, PSSCH 1110, PSSCH 1120, and PSFCH 1124. In some examples, the COT initiator or donor may use slot 1104, and shares slot 1106 with a COT recipient. The gap 1114 is provided between the slot 1104 and 1106 to enable sharing the slot 1106 to the COT recipient. The COT recipient may transmit PSCCH, PSSCH, and PSFCH in the share slot 1106.

In some examples, a COT initiator (e.g., UE 1004) may request the allocation of COT 1100, and a gNB (e.g., gNB 1002) may schedule the COT initiator with the COT 1100. In some aspect, the COT initiator may use 1104, and share 1106 with one or more remote UEs as described in FIG 10A-B. In some aspects, COT 1100 may be shared by a COT donor or initiator to a remote UE, and the remote UE may use 1104, and share 1106 to one or more remote UEs as described in FIG. 10C-D.

The SCI1 1108, SCI2 1116 may include information required for the remote or relay UE to decode the PSSCH. In some examples, the COT donor may transmit SCI1 1112, SCI2 116 to the COT recipient. SCI1 112, SCI2 1116 may include information required by the COT recipient to receive the COT. For example, SCI2 may include available bandwidth, grant access, start time of the share part of the COT (slot number), channel access priority values (CAP), remaining time duration of the COT, etc.

In some examples, the initiator UE or the donor UE may transmit the COT sharing information to the recipient UEs in SCI1 1108, SCI2 1124. The COT initiator or the donor UE may also transmit a set of destination IDs (included in in SCI1 1108, SCI2 1124) to the recipients UE, and the recipient UEs accepting the shared COT may transmit a feedback PSFCH 114, 1124 indicating the acceptance of the COT to the initiator or donor UE. The recipient UEs can share the COT to the other UEs in the same way.

In some examples, the initiator UE or the donor UE may transmit the synchronization signals 1112, 1124 (S-PSS, S-SSS) to the recipient UEs. Synchronization signals 1112, 1124 are transmitted in an SL synchronization Signal Block (S-SSB) in a PSBCH. Synchronization signals 1112, 1124 serves as synchronization reference for the recipient UEs. Thus, the recipient UEs can have the same SL timing reference and may establish communication to/from the donor UE.

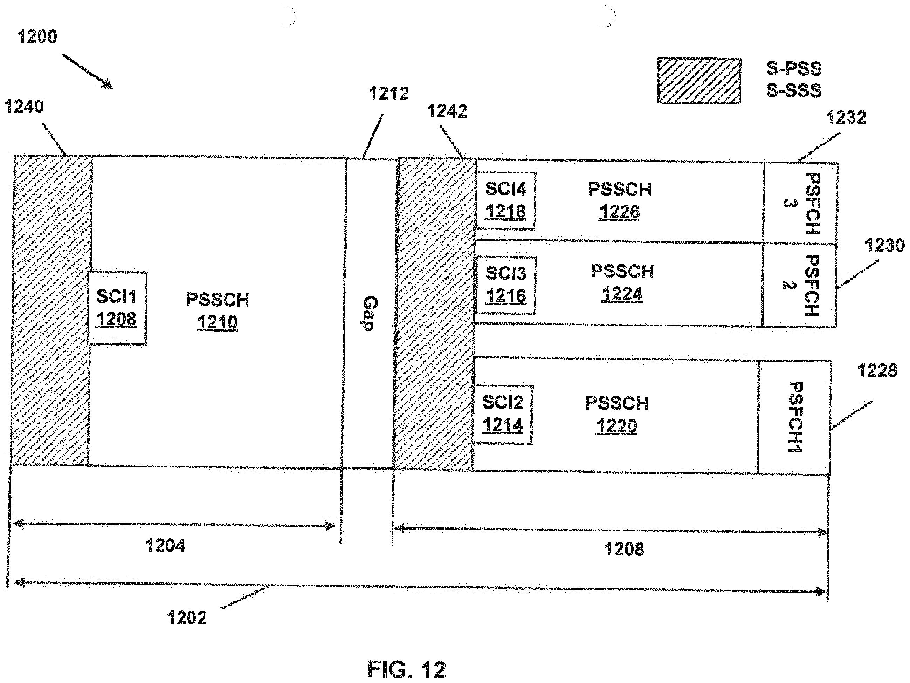

FIG. 12 shows an example illustrating COT resources in time and frequency domain according to some aspects of some of various exemplary embodiments of the present disclosure. The scheme 1200 may be employed by UEs 125A-B in a network such as networks 100 for sidelink communications. In particular, sidelink UEs may employ the scheme 1200 for SCI/SL data communication over the sidelink forward/ backward links. In some aspects, the scheme 1200 can be employed in conjunction with the scheme 1000, 1010, 1020, 1030, 1040 of FIG. 10A-D. In FIG. 1100, the x-axis represents time in some arbitrary units, and the y-axis represents frequency in some arbitrary units. The sidelink COT 1200 may be over a licensed band or a shared radio frequency band (e.g., in an unlicensed band). The COT 1200 may have the same frame structure 700 shown in FIG. 7. For instance, the COT 1100 may include a set of sidelink resource pool for a relay UE (e.g., relay UE 1004) with reference to FIG. 10A-D, arranged in a number of slots across time and a number of subbands in frequency similar to the resource 700 shown in FIG. 7. The scheduled COT 1200 may include one or more slots (e.g., 110, 1120). The COT shown in FIG. 11 includes two slots 1204, 1208, sidelink synchronization signals SSS 1240, 1242 (SL Primary Synchronization S-PSS and SL Secondary Synchronization Signal S-SSS), SCI1 1208, SCI2 1214, SCI3 1216, SCI4 1218, PSSCH 1220, PSSCH 1224, PSSCH 1226, PSFCH 1 1228, PSFCH2 1230, and PSFCH3 1232. In some examples, the COT initiator or donor may use slot 1204, and shares slot 1208 with one or more COT recipients. The gap 1212 is provided between the slot 1204 and 1208 to enable sharing the slot 1106 to the COT recipient. The COT recipient may transmit PSCCH, PSSCH, and PSFCH in the share slot 1208. In some examples the COT donor may divide slot 1208 to several frequency subbands and share each subband to a recipient UE. For examples, PSSCH 1220 in frequency subband 1, PSSCH 1224 in frequency subband 2, and PSSCH 1226 in frequency subband 3, are assigned to different recipient UEs.

In some examples, a COT initiator (e.g., UE 1004) may request the allocation of COT 1200, and a gNB (e.g., gNB 1002) may schedule the COT initiator with the COT 1200. In some aspect, the COT initiator may use 1204, and share 1208 with one or more remote UEs as described in FIG 10A-B. In some aspects, COT 1200 may be shared by a COT donor or initiator to a remote UE, and the remote UE may use 1204, and share different subbands of 1206 to one or more remote UEs as described in FIG. 10C-D.

The SCI1 1208, SCI2 1214, SCI3 1216, SCI4 1218 may include information required for the remote or relay UEs to decode the PSSCH. In some examples, the COT donor may transmit SCI1 1208, SCI2 1214, SCI3 1216, SCI4 1218 to the COT recipients. SCI1 1208, SCI2 1214, SCI3 1216, SCI4 1218 may include information required by the COT recipients to receive the COT. For example, SCI2 1214, SCI3 1216, SCI4 1218 may include available bandwidth, grant access, start time of the share part of the COT (slot number), channel access priority values (CAP), remaining time duration of the COT, etc.

In some examples, the initiator UE or the donor UE may transmit the COT sharing information to the recipient UEs in SCI1 1208, SCI2 1214, SCI3 1216, SCI4 1218. The COT initiator or the donor UE may also transmit a set of destination IDs (included in SCI1 1208, SCI2 1214, SCI3 1216, SCI4 1218) to the recipients UE, and the recipient UEs accepting the shared COT may transmit a feedback PSFCH 1 1228, PSFCH2 1230, PSFCH3 1232 indicating the acceptance of the COT to the initiator or donor UE. The recipient UEs can share the COT to one or more UEs in the same way.

In some examples, the initiator UE or the donor UE may transmit the synchronization signals 1240, 1242 (S-PSS, S-SSS) to the recipient UEs. Synchronization signals 1212, 1218 are transmitted in an SL synchronization Signal Block (S-SSB) in a PSBCH. Synchronization signals 1240, 1242 serves as synchronization reference for the recipient UEs. Thus, the recipient UEs can have the same SL timing reference and may establish communication to/from the donor UE.

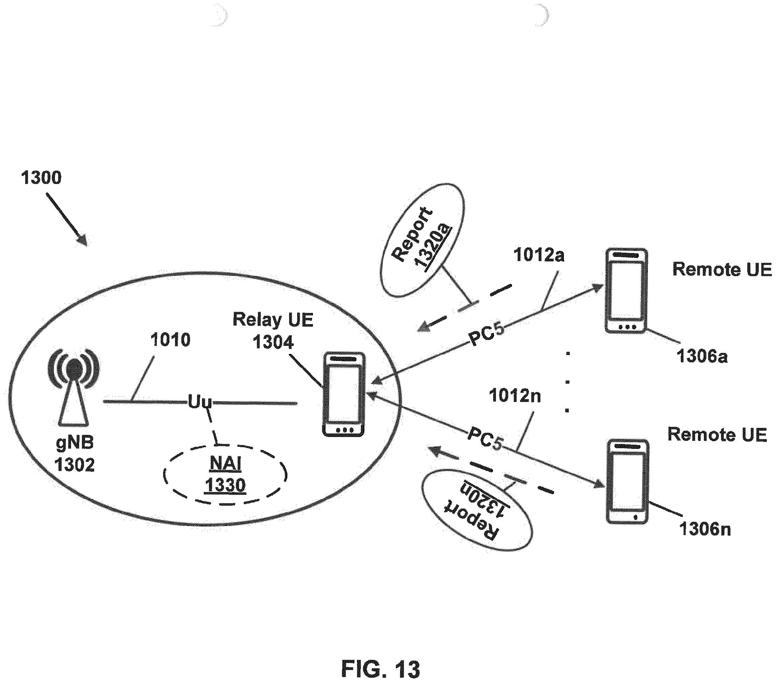

FIG. 13 shows an example of a COT sharing in a Sidelink (SL) communication system with interference measurement capability for limiting collisions in channel access according to some aspects of some of various exemplary embodiments of the present disclosure. The scheme 1300 may be employed by UEs 125A-B in a network such as networks 100 for sidelink communications. In particular, sidelink UEs may employ scheme 1300 for transmission and reception of Sidelink Control Information (SCI) and sidelink data over the forward/backward sidelink links 1012a-n. For example, the relay UE 1304 may transmit SCI/sidelink data over the forward link to the remote UEs 1306a-n, and the remote UE 1306a-n may transmit SCI/sidelink data over the backward link to the relay UE 1304. In the scheme 1300, a relay UE 1304 within the coverage area of gNB 1302 and in communication with gNB 1302 over the link 1010, may operate as a relay for the remote UEs 1306a-n. For instance, the UE 1304 may relay DL SCI/Data from the gNB 1302 to the UEs 1306a-n over link 1012, and/or UL SCI/Data from UEs 1306 to gNB 1002 over link 1012. gNB 1002 may be similar to the gNB 115A-B. The relay UE 1304 may be similar to the relay UE 125A, and the remote UEs 1306a-n, 1034 may be similar to the remote UE 125B.

In the scheme 1300, the relay UE 1304 may communicate with the remote UE 1306a-n using a resource pool. In some scenarios, the relay UE 1304 may share its resource pool with the remote UEs 1306a-n. In some examples, the resource pool may be pre-configured by gNB 1302 or the relay UE 1304 and may be indicated to the remote UEs 1306a-n via relay UE 1004.

In some scenarios (e.g., Unlicensed Spectrum(UL)), relay UE 1304 may trigger a Listen-Before-talk process to access wireless channel 1010 between gNB 1302 and relay UE 1304, and requests for allocation of time and frequency resources. Remote UEs 1306a-n, which are in communication range of UE 1304, may request grant of resources from UE 1304 for the transmission or reception of data to/from UE 1304 and gNB 1302. The UE 1304 may share part of its allocated resource from gNB 1302 with UEs 1306a-n. For example, UE 1304 may request for allocation of Channel Occupancy Time (COT) from gNB 1302, and gNB may schedule UE 1304 with the COT. UE 1304 may use part of the schedule COT, and may share other part to remote UEs 1306a-n. In the above examples, UE 1304 that initiate the COT is the COT initiator; UE 1304 that shares the COT is the COT donor; UEs 1306 that receive the COT are the COT recipient.

In some scenarios, where the COT is shared from an initiator to several UEs, the collision may occur among the UEs trying to access resources. To limit the collision, the relay UE 1304 may allocate the shared COT to the UE 1306a-n according to CAPC values, wherein CPAC values are configured according to traffic type to satisfy Quality of Service (QoS) requirements of different traffic.

In some examples, the remote UEs 1306a-n may measure their interference level and transmit reports 1320a-n to gNB 1302 via relay UE 1304. Then gNB 1302 may transmit information regarding COT sharing to relay UE 1304 (or initiator UE 1304), and UE 1304 may share the COT information among a subset of eligible recipient UEs 1306a-n which are less prone to collisions. As a result, the reported interferences from the remote UE may limit the collisions.

FIG. 14 shows example components of a remote or relay UE for transmission and/or reception according to some. All or a subset of blocks and functions in FIG. 14 may be in the UE 1400 and may be performed by the user equipment 1400. The Antenna 1410 may be used for transmission or reception of electromagnetic signals. The Antenna 1410 may comprise one or more antenna elements and may enable different input-output antenna configurations including Multiple-Input Multiple Output (MIMO) configuration, Multiple-Input Single-Output (MISO) configuration and Single-Input Multiple-Output (SIMO) configuration. In some embodiments, the Antenna 1410 may enable a massive MIMO configuration with tens or hundreds of antenna elements. The Antenna 1410 may enable other multi-antenna techniques such as beamforming. In some examples and depending on the UE 1400 capabilities, the UE 1400 may support a single antenna only.

The transceiver 1420 may communicate bi-directionally, via the Antenna 1410, wireless links as described herein. For example, the transceiver 1420 may represent a wireless transceiver at the UE 1400 and may communicate bi-directionally with the wireless transceiver at the base station or vice versa. The transceiver 1420 may include a modem to modulate the packets and provide the modulated packets to the Antennas 1410 for transmission, and to demodulate packets received from the Antennas 1410.

The memory 1430 may include RAM and ROM. The memory 1430 may store computer-readable, computer-executable code 1435 including instructions that, when executed, cause the processor to perform various functions described herein. In some examples, the memory 1430 may contain, among other things, a Basic Input/output System (BIOS) which may control basic hardware or software operation such as the interaction with peripheral components or devices.

The processor 1440 may include a hardware device with processing capability (e.g., a general purpose processor, a DSP, a CPU, a microcontroller, an ASIC, an FPGA, a programmable logic device, a discrete gate or transistor logic component, a discrete hardware component, or any combination thereof). In some examples, the processor 1440 may be configured to operate a memory using a memory controller. In other examples, a memory controller may be integrated into the processor 1440. The processor 1440 may be configured to execute computer-readable instructions stored in a memory (e.g., the memory 1430) to cause the UE 1400 to perform various functions.

The Central Processing Unit (CPU) 1450 may perform basic arithmetic, logic, controlling, and Input/output (I/O) operations specified by the computer instructions in the Memory 1430. The user equipment 1400 and may include additional peripheral components such as a graphics processing unit (GPU) 1460 and a Global Positioning System (GPS) 1470. The GPU 1460 is a specialized circuitry for rapid manipulation and altering of the Memory 1430 for accelerating the processing performance of the user equipment 1400 and/or the base station 1405. The GPS 1470 may be used for enabling location-based services or other services for example based on geographical position of the user equipment 1400.

COT module 1470, may perform CPT sharing process, transmitting COT information, monitoring for COT information, interference measurement and reporting, collision avoidance for COT access, and COT resource allocation over forward/backward links as described in FIGs. 10-13.

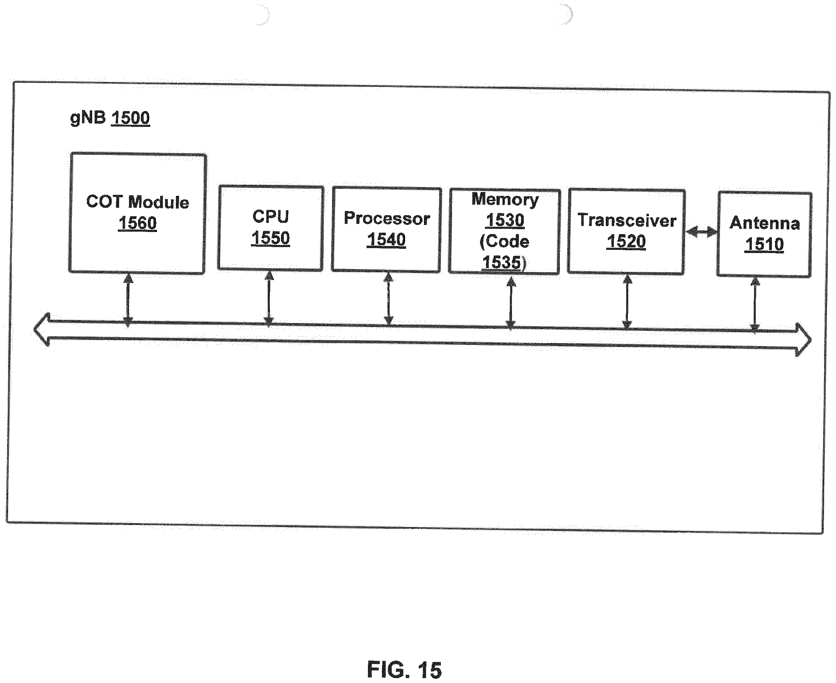

FIG. 15 shows example components of a BS or gNB (e.g., gNB 1002) for transmission and/or reception according to some aspects of some of various exemplary embodiments of the present disclosure. All or a subset of blocks and functions in FIG. 15 may be in the gNB 1500 and may be performed by the user equipment 1500. The Antenna 1510 may be used for transmission or reception of electromagnetic signals. The Antenna 1510 may comprise one or more antenna elements and may enable different input-output antenna configurations including Multiple-Input Multiple Output (MIMO) configuration, Multiple-Input Single-Output (MISO) configuration and Single-Input Multiple-Output (SIMO) configuration. In some embodiments, the Antenna 1510 may enable a massive MIMO configuration with tens or hundreds of antenna elements. The Antenna 1510 may enable other multi-antenna techniques such as beamforming. In some examples and depending on the BS gNB00 capabilities, the gNB 1500 may support a single antenna only.

The transceiver 1520 may communicate bi-directionally, via the Antenna 1510, wireless links as described herein. For example, the transceiver 1520 may represent a wireless transceiver at the UE and may communicate bi-directionally with the wireless transceiver at the base station or vice versa. The transceiver 1520 may include a modem to modulate the packets and provide the modulated packets to the Antennas 1510 for transmission, and to demodulate packets received from the Antennas 1510.

The memory 1530 may include RAM and ROM. The memory 1530 may store computer-readable, computer-executable code 1535 including instructions that, when executed, cause the processor to perform various functions described herein. In some examples, the memory 1530 may contain, among other things, a Basic Input/output System (BIOS) which may control basic hardware or software operation such as the interaction with peripheral components or devices.

The processor 1540 may include a hardware device with processing capability (e.g., a general purpose processor, a DSP, a CPU, a microcontroller, an ASIC, an FPGA, a programmable logic device, a discrete gate or transistor logic component, a discrete hardware component, or any combination thereof). In some examples, the processor 1540 may be configured to operate a memory using a memory controller. In other examples, a memory controller may be integrated into the processor 1540. The processor 1540 may be configured to execute computer-readable instructions stored in a memory (e.g., the memory 1530) to cause the gNB 1700 to perform various functions.

The Central Processing Unit (CPU) 1550 may perform basic arithmetic, logic, controlling, and Input/output (I/O) operations specified by the computer instructions in the Memory 1530.

The COT module agent 1580, may perform COT resource allocation and management, interference management for remote and relay UEs, collision avoidance for COT access, and data communication for the remote UE links as described in FIGs. 10-13.

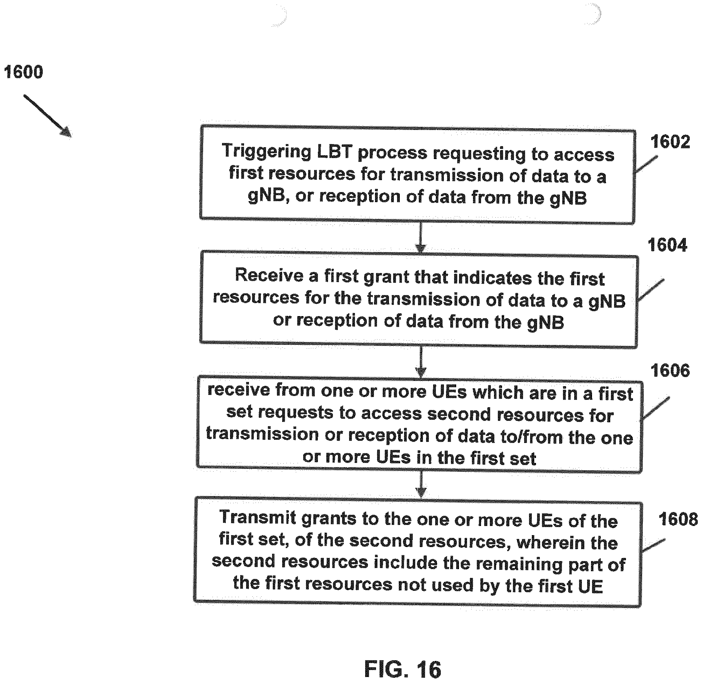

FIG. 16 is a flow diagram illustrating a COT sharing method performed by a relay UE (e.g., UE 2004) according to some aspects of some of various exemplary embodiments of the present disclosure. The steps of method 1600 can be executed by computing devices (e.g., a processor, processing circuit, and/or other components) of the UE. As illustrated, method 1600 may include additional steps before, after, and in between the enumerated steps.

At step 1602, relay UE triggers a listen-before-talk (LBT) process requesting to access first resources for transmission of data to a gNB, or reception of data from the gNB. The first resources may include the COT, and the relay UE is a COT initiator.

At step 1604, the relay UE receive a first grant that indicates the first resources for the transmission of data to a gNB or reception of data from the gNB. The first resource includes the time and frequency subbands allocated to a COT for the relay UE.

At step 1606, the relay UE receives from one or more remote UEs which are in the first set requests to access second resources for transmission or reception of data to/from the one or more UEs in the first set. The one or more remote UEs may use the second resources for the transmission or reception of data to the gNB via the relay UE. The second resources may include the remaining COT time duration or available COT frequency subband not used by the relay UE.

At step 1608, the relay UE transmit grants, to the one or more remote UEs of the first set, of the second resources, wherein the second resources include the remaining part of the first resources not used by the first UE. The relay UE may share the remaining time duration and available frequency subbands of the COT to the one or more remote UEs. In some examples, the relay UE may consider the interference measurement report from the one or more UEs in order to decide how to share the remaining time duration and available frequency subbands of the COT to one or more remote UEs. In some other examples, the relay UE may share the remaining time duration and available frequency subbands based on CPAC values. In some examples, the relay UE may transmit COT information in an SCI. The COT information may include the information required for decoding PSCCH, including but not limited to, bandwidth, grant access, start time (slot number), channel access priority values (CAP), remaining time duration of the COT, etc.

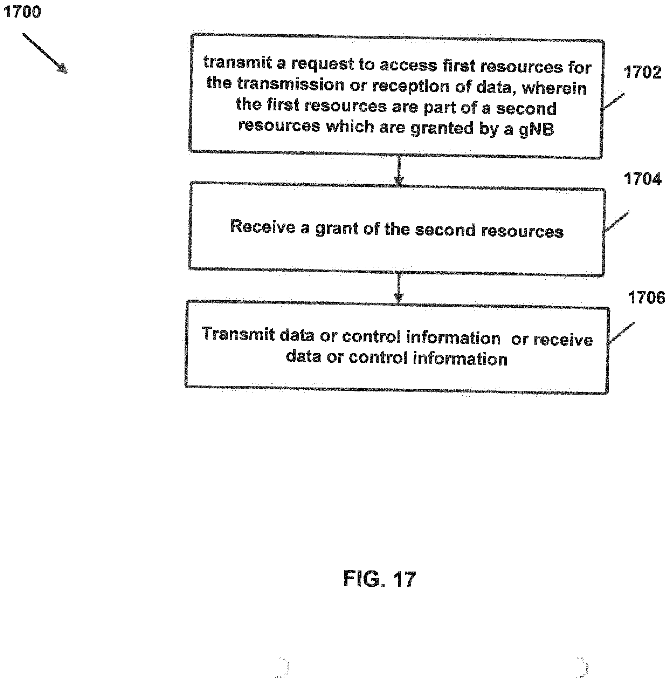

Fig. 17 shows a flow diagram illustrating a COT sharing method performed by a remote UE according to some aspects of some of various exemplary embodiments of the present disclosure.

At step 1702, a remote UE transmit to a relay UE, a request to access first resources for the transmission of data to the relay UE, or reception of data from the second UE, wherein the first resources are part of a second resources which are granted by a base station (BS) to the relay UE and not used by the relay UE. The first resources may include the COT time duration and frequency subbands allocated by the gNB in response to an LBT trigger to the relay UE. The relay UE may use part of the COT and shares the remaining part with one or more remote UEs.

At step 1704, in response to the request, the remote UE receives a grant of the second resources. In some examples, the remote UE may use part of the second resources and share the unused part with one or more UEs. In some examples, the remote UE may receive COT information in an SCI. The COT information may include the information required for decoding PSCCH, including but not limited to, bandwidth, grant access, start time (slot number), channel access priority values (CAP), remaining time duration of the COT, etc.

At step 1706, the remote UE transmits data or control information to the relay UE or receives data or control information from the relay UE.

The functions described in this disclosure may be implemented in hardware, software executed by a processor, firmware, or any combination thereof. Instructions or code may be stored or transmitted on a computer-readable medium for implementation of the functions. Other examples for implementation of the functions disclosed herein are also within the scope of this disclosure. Implementation of the functions may be via physically co-located or distributed elements (e.g., at various positions), including being distributed such that portions of functions are implemented at different physical locations.

Computer-readable media includes but is not limited to non-transitory computer storage media. A non-transitory storage medium may be accessed by a general purpose or special purpose computer. Examples of non-transitory storage media include, but are not limited to, random access memory (RAM), read-only memory (ROM), electrically erasable programmable ROM (EEPROM), flash memory, compact disk (CD) ROM or other optical disk storage, magnetic disk storage or other magnetic storage devices, etc. A non-transitory medium may be used to carry or store desired program code means (e.g., instructions and/or data structures) and may be accessed by a general-purpose or special-purpose computer, or a general-purpose or special-purpose processor. In some examples, the software/program code may be transmitted from a remote source (e.g., a website, a server, etc.) using a coaxial cable, fiber optic cable, twisted pair, digital subscriber line (DSL), or wireless technologies such as infrared, radio, and microwave. In such examples, the coaxial cable, fiber optic cable, twisted pair, DSL, or wireless technologies such as infrared, radio, and microwave are within the scope of the definition of medium. Combinations of the above examples are also within the scope of computer-readable media.

As used in this disclosure, use of the term "or" in a list of items indicates an inclusive list. The list of items may be prefaced by a phrase such as "at least one of' or "one or more of'. For example, a list of at least one of A, B, or C includes A or B or C or AB (i.e., A and B) or AC or BC or ABC (i.e., A and B and C). Also, as used in this disclosure, prefacing a list of conditions with the phrase "based on" shall not be construed as "based only on" the set of conditions and rather shall be construed as "based at least in part on" the set of conditions. For example, an outcome described as "based on condition A" may be based on both a condition A and a condition B without departing from the scope of this disclosure.

In this specification the terms "comprise", "include" or "contain" may be used interchangeably and have the same meaning and are to be construed as inclusive and open-ending. The terms "comprise", "include" or "contain" may be used before a list of elements and indicate that at least all of the listed elements within the list exist but other elements that are not in the list may also be present. For example, if A comprises B and C, both {B, C} and {B, C, D} are within the scope of A.

The present disclosure, in connection with the accompanied drawings, describes example configurations that are not representative of all the examples that may be implemented or all configurations that are within the scope of this disclosure. The term "exemplary" should not be construed as "preferred" or "advantageous compared to other examples" but rather "an illustration, an instance or an example." By reading this disclosure, including the description of the embodiments and the drawings, it will be appreciated by a person of ordinary skills in the art that the technology disclosed herein may be implemented using alternative embodiments. The person of ordinary skill in the art would appreciate that the embodiments, or certain features of the embodiments described herein, may be combined to arrive at yet other embodiments for practicing the technology described in the present disclosure. Thus, the disclosure is not limited to the examples and designs described herein but is to be accorded the broadest scope consistent with the principles and novel features disclosed herein.

## Claims

1. A method of wireless communication, comprising the steps of:
triggering, by a first user equipment (UE), a listen-before-talk (LBT) process requesting to access first resources for transmission of data to a base station (BS), or reception of data from the BS;
in response to triggering the LBT, the first UE receiving a first grant that indicates the first resources for the transmission of data to the base station (BS), or reception of data from the BS;
the first UE receiving, from one or more UEs of a first set of UEs in communication range of the first UE, requests to access second resources for transmission of data between the first UE, and the one or more UEs in the first set; and
the first UE transmitting grants of the second resources to the one or more UEs of the first set, wherein the second resources include a remaining part of the first resources not used by the first UE.

2. The method of claim 1, further comprising:
receiving, at a third user equipment (UE) of the first set of UEs, from one or more UEs in a second set of UEs in communication range with the third UE, requests to access third resources for transmission of data between the third UE, and one or more UEs in the second set; and
transmitting grants of the third resources to the one or more UEs in the second set, wherein the third resources include a remaining part of the second resources not used by the third UE.

3. The method of claim 1 or 2, wherein the first grant is transmitted in a first sidelink control information (SCI) message.

4. The method of any one of the preceding claims, wherein the first resources include frequency bandwidth and time duration.

5. The method of any one of the preceding claims, wherein the grants from the first user equipment (UE) to the one or more UEs of the second set are transmitted in a second sidelink control information (SCI2) message.

6. The method of any one of the preceding claims, wherein the SCI2 includes:
available bandwidth to the one or more user equipments (UEs) in the first set;
a time stamp for the transmission of data between the one or more UEs in the first set and the first UE;
channel access priority values (CAP) for traffic of the one or more UEs in the first set;
and
the remaining time duration not used by the first UE.

7. The method of any one of the preceding claims, wherein the one or more user equipments (UEs) in the first set that receives the grant of access of the second resources transmit, to the first UE, control signals in a physical sidelink control channel (PSCCH), a synchronization signal in a physical sidelink synchronization channel (PSSCH), and feedback signals in a physical sidelink feedback channel.

8. The method of any one of the preceding claims, further comprising:
receiving, from the base station (BS), at the first user equipment (UE), a network assistant information (NAI) that includes information required for accessing the second resources granted by the first UE to the one or more UEs of the first set, and the identification of the UEs of the first set that receive the grants of the second resources.

9. The method of any one of the preceding claims, wherein the first user equipment (UE) allocates the second resources among one or more UEs of the first set based on channel access priority class (CAPC) values of the one or more UEs allocated traffic;
and/or
wherein the first user equipment (UE) divides the second resources into several subsets and transmits each subset to the one or more UEs of the first set that requested to access the resources.

10. The method of any one of the preceding claims, further comprising:
measuring interference, by the one or more user equipments (UEs) of the first set; and
reporting the measured interference to the first UE.

11. The method of claim 10, wherein the first user equipment (UE) allocates the second resources among one or more UEs based on the reported interference measurements.

12. A method of wireless communication, comprising the steps of:
transmitting, by a first user equipment (UE) to a second UE, a request to access first resources for the transmission of data to the second UE, or reception of data from the second UE, wherein the first resources are part of second resources that are granted by a base station (BS) to the second UE and not used by the second UE; and
in response to the request, the first UE receiving a grant of the second resources; and
the first UE transmitting data or control information to the second UE or receiving data or control information from the second UE.

13. The method of claim 12, wherein the second resources include time and frequency resources of channel occupancy time (COT) allocated to the second user equipment (UE);
and/or
wherein the first user equipment (UE) transmits, to the second UE, control signals in a physical sidelink control channel (PSCCH), a synchronization signal in a physical sidelink synchronization channel (PSSCH), and feedback signals in a physical sidelink feedback channel;
and/or
the method further comprising:
measuring interference, by the first user equipment (UE); and
reporting the measured interference to the second UE, and wherein optionally the first resources are determined by the reported interference measurement.

14. The method of claim 12 or claim 13, wherein receiving the grant includes receiving a message in a sidelink control channel (SCI) information; and
wherein the sidelink control channel (SCI) optionally includes: frequency bandwidth available to the first user equipment (UE); time stamp for the transmission of data between the first UE and the second UE; remaining time duration of the second resource not used by the first UE;
and/or
the method further comprising the method of any one of claims 1 to 11.

15. A user equipment (UE), comprising a transceiver configured to:
trigger a listen-before-talk (LBT) process requesting access to first resources for transmission of data to a base station (BS), or reception of data from the BS;
in response to the LBT, the UE receiving a first grant that indicates the first resources for the transmission of data to the base station (BS), or reception of data from the BS;
the UE receiving, from one or more other UEs of a first set of other UEs in communication range of the first UE, requests to access second resources for transmission of data between the first UE, and the one or more other UEs of the first set; and
the UE transmitting grants of the second resources, to the one or more other UEs of the first set, wherein the second resources include a remaining part of the first resources not used by the first UE.
